(19) Europäisches Patentamt / European Patent Office / Office européen des brevets

(11) **EP 3 517 347 A1**

(12) **EUROPEAN PATENT APPLICATION**
published in accordance with Art. 153(4) EPC

(43) Date of publication:
**31.07.2019 Bulletin 2019/31**

(21) Application number: **17853003.6**

(22) Date of filing: **15.09.2017**

(51) Int Cl.:
*B60L 15/20* (2006.01)     *B60K 7/00* (2006.01)
*B60L 9/18* (2006.01)      *F16D 41/06* (2006.01)
*F16H 3/66* (2006.01)      *F16H 3/72* (2006.01)
*F16H 59/10* (2006.01)     *F16H 61/02* (2006.01)
*F16H 63/50* (2006.01)     *H02K 7/116* (2006.01)
*B60K 17/12* (2006.01)

(86) International application number:
**PCT/JP2017/033587**

(87) International publication number:
**WO 2018/056230 (29.03.2018 Gazette 2018/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.09.2016   JP 2016184507
15.06.2017   JP 2017117995**

(71) Applicant: **NSK Ltd.**
**Tokyo 141-8560 (JP)**

(72) Inventors:
• **MORITA, Ryuho**
**Fujisawa-shi**
**Kanagawa 251-8501 (JP)**

• **MATSUDA, Yasuyuki**
**Fujisawa-shi**
**Kanagawa 251-8501 (JP)**
• **GUNJI, Daisuke**
**Fujisawa-shi**
**Kanagawa 251-8501 (JP)**
• **OIKE, Mitsuru**
**Fujisawa-shi**
**Kanagawa 251-8501 (JP)**
• **YAMAMOTO, Shin**
**Fujisawa-shi**
**Kanagawa 251-8501 (JP)**

(74) Representative: **SSM Sandmair**
**Patentanwälte Rechtsanwalt**
**Partnerschaft mbB**
**Joseph-Wild-Straße 20**
**81829 München (DE)**

(54) **ELECTRIC VEHICLE DRIVE DEVICE**

(57)     An electric vehicle drive apparatus includes a first motor, a second motor, a speed change mechanism coupled to the first motor and the second motor, and a controller controlling operation of the first motor and the second motor. The speed change mechanism includes a first planetary gear mechanism, a second planetary gear mechanism, and a one-way clutch that limits a rotation direction of a first carrier of the first planetary gear mechanism to a certain forward rotation direction. When rotating the first motor in a backward rotation direction opposite to the certain forward rotation direction and rotating the second motor in the forward rotation direction, the controller determines rotation speeds of the first motor and the second motor within a range indicated by Expression (1).

FIG.15

**Description**

Field

The present invention relates to an electric vehicle drive apparatus.

Background

A drive apparatus driven by battery electric power is incorporated in electric vehicles such as electric automobiles. In such a drive apparatus, a drive apparatus that directly drives a wheel in particular is called an in-wheel motor. A gear reduction system including a reduction mechanism is known as a drive system of the in-wheel motor (Patent Literature 1, for example). The in-wheel motor described in Patent Literature 1 can easily output torque required when an electric vehicle starts or climbs a hill by two motors.

Citation List

Patent Literature

Patent Literature 1: Japanese Patent Application Laid-open No. 2013-044424 A

Summary

Technical Problem

In the in-wheel motor described in Patent Literature 1, a one-way clutch as a component for outputting such torque is provided in the reduction mechanism. The one-way clutch is provided on the supposition that a wheel rotates in a forward traveling direction of the electric vehicle. For this reason, motor drive during forward traveling cannot be simply used during backward traveling.
The present invention has been made in view of the foregoing, and an object thereof is to provide an electric vehicle drive apparatus that also enables backward traveling. Solution to Problem
To achieve the above object, an electric vehicle drive apparatus according to the present invention includes a first motor, a second motor, a speed change mechanism coupled to the first motor and the second motor, and a controller controlling operation of the first motor and the second motor. The speed change mechanism includes a sun gear shaft coupled to the first motor, a first planetary gear mechanism having a first sun gear rotating together with the sun gear shaft, a first pinion gear meshing with the first sun gear, a first ring gear that meshes with the first pinion gear and is coupled to the second motor, and a first carrier that is provided rotatably about the sun gear shaft and supports the first pinion gear, a second planetary gear mechanism having a second sun gear rotating together with the sun gear shaft, a second pinion gear meshing with the second sun gear, a third pinion gear meshing with the second pinion gear, a second ring gear that meshes with the third pinion gear and is coupled to an output shaft, and a second carrier that supports the second pinion gear and the third pinion gear and is coupled to the first ring gear to rotate about the sun gear shaft, and a one-way clutch limiting a rotation direction of the first carrier to a certain forward rotation direction, and the controller, when rotating the first motor in a backward rotation direction opposite to the forward rotation direction and rotating the second motor in the forward rotation direction, where a rotation speed of the first motor is $N_{MA}$, a rotation speed of the second motor is $N_{MB}$, a reduction ratio of the first planetary gear mechanism is $i_1$, and a reduction ratio of the second planetary gear mechanism is $i_2$, determining $N_{MB}$ within a range indicated by Expression (1):

$$-\frac{1}{i_1} \times N_{MA} \leq N_{MB} < \left(\frac{1}{1-i_2}\right) \times N_{MA} \qquad (1)$$

With this configuration, in an electric vehicle drive apparatus provided on the supposition of rotation in the forward rotation direction, in which the one-way clutch does not perform braking, the second ring gear can be rotated in the backward rotation direction, in which the one-way clutch performs braking. Consequently, an electric vehicle drive apparatus that also enables backward traveling even when any of the forward rotation direction and the backward rotation direction is the front can be provided.
As a desirable embodiment of the present invention, where a positive threshold for acceleration in the forward rotation direction of the first motor is $\alpha$, a negative threshold for acceleration in the backward rotation direction of the second motor is $\beta$, a change in a rotation speed of the first motor per a certain unit time is $R_1$, a change in a rotation speed of the second motor per the certain unit time is $R_2$, a rotation speed command value for the first motor for obtaining $N_{MA}$ is $D_{MA}$, a rotation speed command value for the second motor for obtaining $N_{MB}$ is $D_{MB}$, a rotation speed command value for the first motor before a lapse of the certain unit time is $X_{i-1}$, and a rotation speed command value for the second motor before a lapse of the certain unit time is $Y_{i-1}$, when the first motor is rotating in the backward rotation direction and the second motor is rotating in the forward rotation direction, the controller calculates $D_{MA}$ by Expression (2) when $R_1 > \alpha$ holds true and calculates $D_{MB}$ by Expression (3) when $R_2 < \beta$ holds true:

$$D_{MA} = \Delta t \cdot \alpha + X_{i-1} \qquad\qquad (2)$$

$$D_{MB} = \Delta t \cdot \beta + Y_{i-1} \qquad\qquad (3)$$

With this configuration, even when an abrupt reduction in acceleration occurs during backward traveling, an abrupt change in a rotation speed of the output shaft can be prevented. Consequently, abrupt braking during backward traveling can be prevented, and vehicle operability can be improved.

As a desirable embodiment of the present invention, the controller determines $N_{MA}$ and $N_{MB}$ such that $N_{MB}$ is a median within the range of Expression (1).

With this configuration, deviation from the relation between the rotation speed of the first motor and the rotation speed of the second motor that enables backward traveling can be prevented more surely.

As a desirable embodiment of the present invention, where number of teeth of the first sun gear is $Z_{S1}$, number of teeth of the first ring gear is $Z_{R1}$, number of teeth of the second sun gear is $Z_{S2}$, and number of teeth of the second ring gear is $Z_{R2}$, $i_1$ is represented by Expression (4), whereas $i_2$ is represented by Expression (5):

$$i_1 = {Z_{R1}} \big/ {Z_{S1}} \qquad\qquad (4)$$

$$i_2 = {Z_{R2}} \big/ {Z_{S2}} \qquad\qquad (5)$$

With this configuration, the number of teeth of the first sun gear, the number of teeth of the first ring gear, the number of teeth of the second sun gear, and the number of teeth of the second ring gear are set to be any number, whereby the relation between the rotation speed of the first motor and the rotation speed of the second motor indicated by Expression (1) can be set to any relation.

As a desirable embodiment of the present invention, a rotation direction of a wheel coupled to the output shaft is the same as a rotation direction of the first motor, and when a drive signal of the wheel includes information directing rotation of the wheel in the backward rotation direction, the controller outputs a rotation speed command in the backward rotation direction to the first motor and outputs a rotation speed command in the forward rotation direction to the second motor.

With this configuration, the relation between the rotation speed of the first motor rotating in the backward rotation direction and the rotation speed of the second motor is set to Expression (1), whereby backward traveling is enabled.

As a desirable embodiment of the present invention, the drive signal, when including information directing rotation of a wheel in the forward rotation direction, further includes speed change information indicating whether the current state is a first state that performs control of the second motor based on torque or a second state that performs control of the second motor based on rotation speed, and the controller determines, based on the drive signal, rotation directions of the first motor and the second motor and based on which of torque and rotation speed control of the second motor is performed.

With this configuration, in forward traveling, the rotation directions of the first motor and the second motor and based on which of torque and rotation speed control of the second motor is performed are determined, whereby shock during speed changing during forward traveling can be reduced.

As a desirable embodiment of the present invention, the drive signal includes throttle information indicating an acceleration of a rotation speed of the wheel, and when the speed change information indicates the first state, the controller determines a first command value as a torque command value in the forward rotation direction of the first motor based on the throttle information to operate the first motor in accordance with the first command value and determines a second command value as a torque command value in the backward rotation direction of the second motor based on the throttle information to operate the second motor in accordance with the second command value.

With this configuration, higher torque can be output during forward traveling.

As a desirable embodiment of the present invention, the electric vehicle drive apparatus includes a detector detecting the rotation speed of the first motor. The drive signal includes throttle information indicating an acceleration of a rotation speed of the wheel, and when the speed change information indicates the second state, the controller determines a torque command value in the forward rotation direction of the first motor based on the throttle information to operate the first motor in accordance with the torque command value and determines a rotation speed command value corresponding to the rotation speed of the first motor detected by the detector to operate the second motor in accordance with the rotation speed command value.

With this configuration, in forward traveling, without requiring to design any complicated control system for causing the operation of the second motor to operate in a linked manner with the first motor, the operation of the second motor can be operated in a linked manner in accordance with the rotation direction and the rotation speed of the first motor. In addition, a higher rotation speed can be output.

Advantageous Effects of Invention

The present invention can provide an electric vehicle drive apparatus that also enables backward traveling.

Brief Description of Drawings

FIG. 1 is a schematic diagram of a configuration of an electric vehicle drive apparatus of the present embodiment.

FIG. 2 is a schematic diagram of an example of relations among an operating system, a controller, a first motor and a second motor, a speed change mechanism, and a first rotation angle detector and a second rotation angle detector.

FIG. 3 is a table of an example of a correspondence relation among an operation mode determined by travel direction information and speed change information, control of the first motor and the second motor by the controller, a state of a clutch apparatus brought about by the control, a torque of the electric vehicle drive apparatus, and a rotation direction of a speed change mechanism input/output shaft.

FIG. 4 is a flowchart of a branching example of control of the first motor and the second motor by the controller.

FIG. 5 is a schematic diagram of paths through which torques are transmitted when the electric vehicle drive apparatus according to the present embodiment is in a first state.

FIG. 6 is a schematic diagram of paths through which torques are transmitted when the electric vehicle drive apparatus according to the present embodiment is in a second state.

FIG. 7 is a graph of a transition example of torque command values to the first motor and the second motor when the first state has switched to the second state.

FIG. 8 is a graph of a transition example of rotation speed command values to the first motor and the second motor when the first state has switched to the second state.

FIG. 9 is a graph of a transition example of rotation speeds of the first motor and the second motor when the first state has switched to the second state.

FIG. 10 is a graph of transition in a wheel rotation speed corresponding to the transition in the rotation speeds of the first motor and the second motor illustrated in FIG. 9.

FIG. 11 is a graph of a transition example of torque command values to the first motor and the second motor when the second state has switched to the first state.

FIG. 12 is a graph of a transition example of rotation speed command values to the first motor and the second motor when the second state has switched to the first state.

FIG. 13 is a graph of a transition example of rotation speeds of the first motor and the second motor when the second state has switched to the first state.

FIG. 14 is a graph of transition in a wheel rotation speed corresponding to the transition in the rotation speeds of the first motor and the second motor illustrated in FIG. 13.

FIG. 15 is a graph illustrating a case in which backward traveling is established and a case in which backward traveling is not established in a distinguished manner for a combination of the rotation speeds of the respective first motor and second motor.

FIG. 16 is a graph of a transition example of rotation speed command values to the first motor and the second motor during backward traveling.

FIG. 17 is a graph of a transition example of rotation speeds of the first motor and the second motor during backward traveling.

FIG. 18 is a graph of transition in a wheel rotation speed corresponding to the transition in the rotation speeds of the first motor and the second motor illustrated in FIG. 17.

FIG. 19 illustrates graphs of a throttle signal value, rotation speed command values for the respective motors, actual rotation speeds of the respective motors, and a wheel rotation speed in an example in which operation control of the first motor and the second motor corresponding to preset $\alpha$ and $\beta$ is performed.

FIG. 20 illustrates graphs of a throttle signal value, rotation speed command values for the respective motors, actual rotation speeds of the respective motors, and a wheel rotation speed in a comparative example in which operation control of the first motor and the second motor simply following throttle information corresponding to an operation on an accelerator pedal is performed.

FIG. 21 is an elevational view of the electric vehicle drive apparatus according to the present embodiment.

FIG. 22 is an A-A sectional view of FIG. 21.

FIG. 23 is a sectional view illustrating a first rotor holding member in FIG. 22 in an enlarged manner.

FIG. 24 is a sectional view illustrating a second rotor holding member in FIG. 22 in an enlarged manner.

FIG. 25 is a perspective view viewing a partition, a clutch apparatus, and a first rotation angle detector from the first motor side.

FIG. 26 is a perspective view viewing the partition, the clutch apparatus, and a second rotation angle detector from the second motor side.

FIG. 27 is a perspective view viewing the clutch apparatus and the first rotation angle detector from the first motor side.

FIG. 28 is a perspective view viewing the clutch apparatus and the second rotation angle detector from the second motor side.

FIG. 29 is a perspective view viewing the clutch apparatus from the first motor side.

FIG. 30 is a perspective view viewing the clutch apparatus from the second motor side.

FIG. 31 is a schematic diagram of an example of the position of a second signal line relative to the position of a first signal line.

FIG. 32 is a perspective view viewing a first rotor holding member according to a modification from one side.

FIG. 33 is a perspective view viewing the first rotor holding member according to the modification from the other side. Description of Embodiments

The following describes a mode for performing the present invention (an embodiment) in detail with reference to the accompanying drawings. The present invention is not limited to the following description related to the embodiment. Components described below include ones that those skilled in the art can easily conceive of and ones that are substantially the same. Further, the components described below can be omitted, replaced, or modified without departing from the gist of the invention.

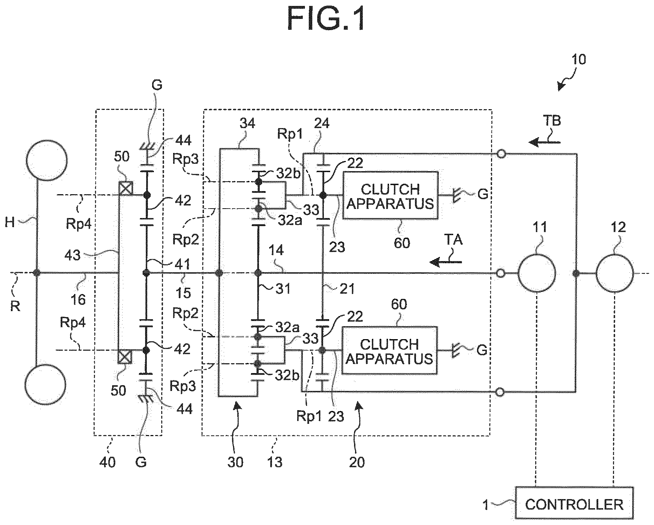

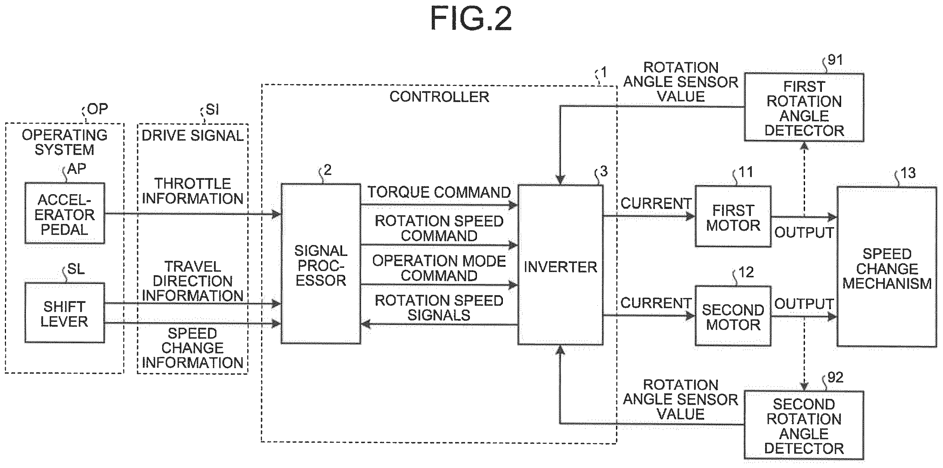

FIG. 1 is a schematic diagram of a configuration of an electric vehicle drive apparatus 10 of the present embodiment. The electric vehicle drive apparatus 10 includes a case G, a first motor 11, a second motor 12, a speed change mechanism 13, a reduction mechanism 40, a wheel bearing 50, a wheel input/output shaft 16, and a controller 1. The case G supports the first motor 11, the second motor 12, the speed change mechanism 13, and the reduction mechanism 40. The speed change mechanism 13 is coupled to the first motor 11 and the second motor 12. In the electric vehicle drive apparatus 10, the reduction mechanism 40 is connected to a wheel (a wheel H). The electric vehicle drive apparatus 10 is connected to a chassis of an electric vehicle via a knuckle integral with the case G, for example. The electric vehicle is provided with an operating system OP having an accelerator pedal AP, a shift lever SL, and the like (refer to FIG. 2). In the present embodiment, although a drive signal SI used by the controller 1 of the electric vehicle drive apparatus 10 for operation control of the first motor 11 and the second motor 12 is output in accordance with operation by a driver on the operating system OP, this shows an example of output of the drive signal SI, and this is not limiting; the specific configuration about output of the drive signal SI can be modified as appropriate.

The first motor 11 can output a first torque TA. The second motor 12 can output a second torque TB. The speed change mechanism 13 is coupled to the first motor 11. With this configuration, when the first motor 11 operates, the first torque TA is transmitted (input) from the first motor 11 to the speed change mechanism 13. The speed change mechanism 13 is coupled to the second motor 12. With this configuration, when the second motor 12 operates, the second torque TB is transmitted (input) from the second motor 12 to the speed change mechanism 13. The operation of the motor in this example refers to the rotation of an input/output shaft of the first motor 11 or the second motor 12 by supply of electric power to the first motor 11 or the second motor 12. The electric vehicle drive apparatus 10 is provided with a first rotation angle detector 91 functioning as a detector for detecting a rotation speed of the first motor 11. The electric vehicle drive apparatus 10 of the present embodiment is provided with a second rotation angle detector 92 for detecting a rotation speed of the second motor 12 (refer to FIG. 2, FIG. 25, and FIG. 26).

The speed change mechanism 13 is coupled to the first motor 11, the second motor 12, and the wheel input/output shaft 16 and can change a reduction ratio (the ratio of an input angular velocity to an output angular velocity to the speed change mechanism 13). The speed change mechanism 13 includes a sun gear shaft 14, a first planetary gear mechanism 20, a second planetary gear mechanism 30, and a clutch apparatus 60.

The sun gear shaft 14 is coupled to the first motor 11. When the first motor 11 operates, the sun gear shaft 14 rotates about a rotation shaft R.

The first planetary gear mechanism 20 is a single pinion type planetary gear mechanism, for example. The first planetary gear mechanism 20 includes a first sun gear 21, a first pinion gear 22, a first carrier 23, and a first ring gear 24.

The first sun gear 21 is coupled to the sun gear shaft 14. The first sun gear 21 can rotate (rotate on its axis) about the rotation shaft R together with the sun gear shaft 14. When the first motor 11 operates, the first torque TA is transmitted from the first motor 11 to the first sun gear 21. With this configuration, when the first motor 11 operates, the first sun gear 21 rotates (rotates on its axis) about the rotation shaft R. The first pinion gear 22 meshes with the first sun gear 21.

The first carrier 23 is supported on the sun gear shaft 14. The first carrier 23 supports the first pinion gear 22 such that the first pinion gear 22 can rotate (rotate on its axis) about a first pinion rotation shaft Rp1. The first pinion rotation shaft Rp1 is parallel to the rotation shaft R, for example. The first carrier 23 supports the first pinion gear 22 such that the first pinion gear 22 can revolve about the rotation shaft R. In other words, the first carrier 23 is provided rotatably about the sun gear shaft 14.

The first ring gear 24 meshes with the first pinion gear 22. The first ring gear 24 can rotate (rotate on its axis) about the rotation shaft R. The first ring gear 24 is coupled to the second motor 12. When the second motor 12 operates, the second torque TB is transmitted from the second motor 12 to the first ring gear 24. With this configuration, when the second motor 12 operates, the first ring gear 24 rotates (rotates on its axis) about the rotation shaft R.

The clutch apparatus 60 limits a rotation direction of the first carrier 23 to a certain forward rotation direction. Specifically, the clutch apparatus 60 is a one-way clutch apparatus and transmits only torque in a first direction and does not transmit torque in a second direction as a direction opposite to the first direction. The clutch apparatus 60 is placed between the case G and the first carrier 23. The clutch apparatus 60 can limit the rotation of the first carrier 23. Specifically, the clutch apparatus 60 can switch between a state that limits (brakes) the rotation of the first carrier 23 about the rotation shaft R and a state that permits the rotation. In other words, the clutch apparatus 60 can make the first carrier 23 rotatable relative to the case G and can make the first carrier 23 nonrotatable relative to the case G. In the following description, the state in which the clutch apparatus 60 limits (brakes) the rotation will be referred to as a braking state, whereas the state that permits the rotation will be referred to as a non-braking state.

The second planetary gear mechanism 30 is a double pinion type planetary gear mechanism, for example. The second planetary gear mechanism 30 includes a second sun gear 31, a second pinion gear 32a, a third pinion gear 32b, a second carrier 33, and a second ring gear 34.

The second sun gear 31 is coupled to the sun gear shaft 14. When the first motor 11 operates, the first torque TA is transmitted from the first motor 11 to the second sun gear 31. The second sun gear 31 can rotate (rotate on its axis) about the rotation shaft R together with the sun gear shaft 14 and the first sun gear 21. The second pinion gear 32a meshes with the second sun gear 31. The third pinion gear 32b meshes with the second pinion gear 32a.

The second carrier 33 is supported on the sun gear shaft 14. The second carrier 33 supports the second pinion gear 32a such that second pinion gear 32a can rotate (rotate on its axis) about a second pinion rotation shaft Rp2. The second carrier 33 supports the third pinion gear 32b such that the third pinion gear 32b can rotate (rotate on its axis) about a third pinion rotation shaft Rp3. The second pinion rotation shaft Rp2 and the third pinion rotation shaft Rp3 are parallel to the rotation shaft R, for example. The second carrier 33 supports the second pinion gear 32a and the third pinion gear 32b such that the second pinion gear 32a and the third pinion gear 32b can revolve about the rotation shaft R. The second carrier 33 is coupled to the first ring gear 24. With this configuration, when the first ring gear 24 rotates (rotates on its axis), the second carrier 33 rotates (rotates on its axis) about the rotation shaft R. In other words, the second carrier 33 rotates about the sun gear shaft 14.

The second ring gear 34 meshes with the third pinion gear 32b. The second ring gear 34 can rotate (rotate on its axis) about the rotation shaft R. The second ring gear 34 is coupled to a speed change mechanism input/output shaft 15 as an output shaft of the speed change mechanism 13. With this configuration, when the second ring gear 34 rotates (rotates on its axis), the speed change mechanism input/output shaft 15 rotates.

The reduction mechanism 40 is placed between the speed change mechanism 13 and the wheel H of the electric vehicle. The reduction mechanism 40 reduces an angular velocity of the speed change mechanism input/output shaft 15 to output the angular velocity to the wheel input/output shaft 16. The wheel input/output shaft 16 is coupled to the wheel H of the electric vehicle to transmit power between the reduction mechanism 40 and the wheel H. Torque produced in at least either the first motor 11 or the second motor 12 is transmitted to the wheel H via the speed change mechanism 13 and the reduction mechanism 40. Torque produced in the wheel H while the electric vehicle is traveling on a downhill or the like is transmitted to at least either the first motor 11 or the second motor 12 via the reduction mechanism 40 and the speed change mechanism 13. In this case, at least either the first motor 11 or the second motor 12 operates as a generator. Rotation resistance during power generation acts on the electric vehicle as a braking force as a regeneration brake. The reduction mechanism 40 includes a third sun gear 41, a fourth pinion gear 42, a third carrier 43, and a third ring gear 44.

The third sun gear 41 is coupled to the speed change mechanism input/output shaft 15. In other words, the third sun gear 41 is coupled to the second ring gear 34 via the speed change mechanism input/output shaft 15. The fourth pinion gear 42 meshes with the third sun gear 41. The third carrier 43 supports the fourth pinion gear 42 such that the fourth pinion gear 42 can rotate on its axis about a fourth pinion rotation shaft Rp4 and that the fourth pinion gear 42 can revolve about the third sun gear 41. The third ring gear 44 meshes with the fourth pinion gear 42 and is fixed to the case G. The third carrier 43 is coupled to the wheel H via the wheel input/output shaft 16. The third carrier 43 is rotatably supported by the wheel bearing 50.

The reduction mechanism 40 rotates the wheel input/output shaft 16 at a speed lower than the angular velocity of the speed change mechanism input/output shaft 15 to drive the wheel H. Consequently, even when maximum torques of the first motor 11 and the second motor 12 are small, the electric vehicle drive apparatus 10 can transmit torque required when the electric vehicle starts or climbs a hill (when it climbs a slope) to the wheel H. Consequently, only a small current for operating the first motor 11 and the second motor 12 is required, and the first motor 11 and the second motor 12 are reduced in size and weight, thus achieving reductions in the manufacturing costs and weight of the electric vehicle drive apparatus 10.

FIG. 2 is a schematic diagram of an example of relations among the operating system OP, the controller 1, the first motor 11 and the second motor 12, the speed change mechanism 13, and the first rotation angle detector 91 and the second rotation angle detector 92. The controller 1 controls operation of the electric vehicle drive apparatus 10. Specifically, the controller 1 controls angular velocities, rotation directions, and output of the first motor 11 and the second motor 12. The controller 1 has a signal processor 2 and an inverter 3, for example. The signal processor 2 is a microcomputer, for example, and controls operation of the inverter 3 based on the drive signal SI obtained in accordance with operation on the operating system OP including the accelerator pedal AP and the shift lever SL of the electric vehicle. The inverter 3 supplies electric power to the first motor 11 and the second motor 12.

The drive signal SI includes travel direction information functioning as information indicating a rotation direction of the wheel H, speed change information, and throttle information. The travel direction information is information identified in accordance with a travel direction of the electric vehicle determined by the shift lever SL, for example. Specifically, when the position of the shift lever SL is reverse (R), the electric vehicle is operated to move backward, whereas when the position of the shift lever SL is neither parking (P) nor reverse (R), the electric vehicle is operated to move forward. The travel direction information is information obtained in accordance with the position of the shift lever SL.

The travel direction of the electric vehicle and a rotation direction of the speed change mechanism input/output shaft 15 have a certain relation. In the following description, the rotation direction of the speed change mechanism input/output shaft 15 when the electric vehicle moves forward is defined as a "forward rotation direction," whereas the rotation direction of the speed change mechanism input/output shaft 15 when the electric vehicle moves backward is defined as a "backward rotation direction." In the drawing, the "forward rotation direction" is denoted by "forward (+)," whereas the "backward rotation direction" is denoted by "backward (-)." As a specific example, in the case of a general four-wheel vehicle, when the electric vehicle moves forward, a left wheel rotates clockwise when viewed from the speed change mechanism input/output shaft 15 side, whereas a right wheel rotates counterclockwise when viewed from the speed change mechanism input/output shaft 15 side. In other words, the clockwise direction is the "forward rotation direction" for the speed change mechanism input/output shaft 15 connected to the left wheel, whereas the counterclockwise direction is the "forward rotation direction" for the speed change mechanism input/output shaft 15 connected to the right wheel. In backward traveling, the rotation direction of each wheel H is reversed.

In the present embodiment, the rotation direction of the speed change mechanism input/output shaft 15 is the same as a rotation direction of the sun gear shaft 14. In the present embodiment, the rotation direction of the sun gear shaft 14 is the same as a rotation direction of the first motor 11. In other words, in the present embodiment, the rotation direction of the wheel H coupled to the speed change mechanism input/output shaft 15 is the same as the rotation direction of the first motor 11.

Information indicated by the position of the shift lever SL includes information obtained in accordance with whether the position of the shift lever SL is low gear (L), for example. When the position of the shift lever SL is low gear (L), the electric vehicle is operated to move forward with a relatively high torque compared with a case in which it is not low gear (L). When the position of the shift lever SL is neither parking (P), reverse (R), nor low gear (L), the electric vehicle is operated to move forward at a relatively high speed compared with a case in which it is low gear (L). The speed change information is information obtained in accordance with the position of the shift lever SL.

The speed change information functions as information indicating, in a case in which the drive signal SI includes information directing rotation of the wheel H in the forward rotation direction, whether the current state is a first state that performs control of the second motor 12 based on torque or a second state that performs control of the second motor 12 based on rotation speed. Specifically, the case in which the drive signal SI includes information directing rotation of the wheel H in the forward rotation direction refers to a case in which the electric vehicle moves forward and corresponds to a case in which the position of the shift lever SL is neither parking (P) nor reverse (R) in the present embodiment. The case being the first state refers to a case in which the electric vehicle is operated to move forward with a relatively high torque compared with a case in which the position of the shift lever SL is not low gear (L), for example, and corresponds to a case in which the position of the shift lever SL is low gear (L) in the present embodiment. The case being the second state refers to a case in which the electric vehicle is operated to move forward at a relatively high speed compared with a case in which the position of the shift lever SL is low gear (L), for example, and refers to a case in which the position of the shift lever SL is nether parking (P), reverse (R), nor low gear (L) in the present embodiment.

Although the description of the present embodiment with FIG. 2 referred to describes the travel direction information and the speed change information in a distinguished manner, the speed change information may include the travel direction information. Only a case in which the shift lever SL is set to "R" to set the speed change information to "backward traveling" may be treated such that the travel direction information indicates "backward traveling," whereas the other cases may be treated such that the travel direction information indicates "forward traveling," for example.

The throttle information is information obtained in accordance with an accelerator operation amount, for example. The degree of the accelerator operation amount functions as a cause determining the degree of electric energy supplied from the inverter 3 to the first motor 11 and the second motor 12; in general, a larger accelerator operation amount gives larger electric energy supplied from the inverter 3 and causes the first motor 11 and the second motor 12 to be driven to rotate at a higher speed. The accelerator operation amount is the degree of operation on a component determining the throttle information such as a pressing-down amount of the accelerator pedal AP.

The controller 1 applies control by either torque control or rotation speed control in control of each of the first motor 11 and the second motor 12. The controller 1 can make control to be applied to one of the first motor 11 and the second motor 12 and control to be applied to the other thereof the same as each other or different from each other. The torque control refers to control that maintains a produced torque value of a motor at a certain value (a value corresponding to the throttle information, for example). The rotation speed control refers to control that maintains a rotation speed value of a motor at a certain value (a value corresponding to the throttle information, for example). In the present embodiment, the controller 1 can perform operation control of each of the first motor 11 and the second motor 12 individually based on the rotation speeds of the first motor 11 and the second motor 12 detected by the first rotation angle detector 91 and the second rotation angle detector 92 described below.

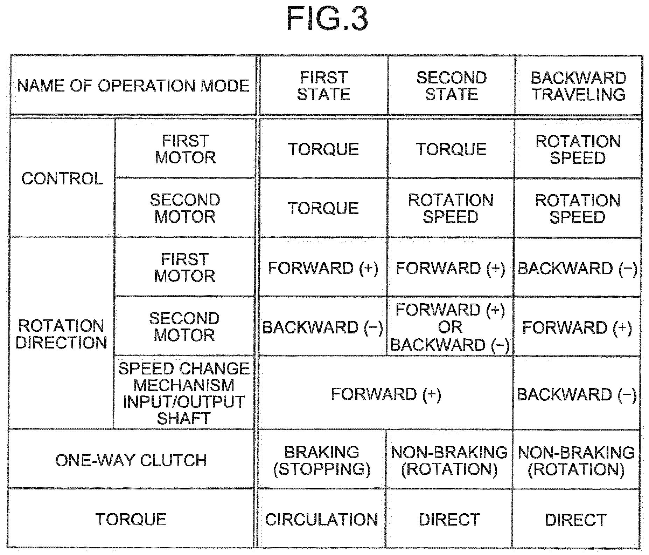

FIG. 3 is a table of an example of a correspondence relation among an operation mode determined by the travel direction information and the speed change information, control of the first motor 11 and the second motor 12 by the controller 1, a state of the clutch apparatus 60 brought about by the control, a torque of the electric vehicle drive apparatus 10, and the rotation direction of the speed change mechanism input/output shaft 15. Based on the drive signal SI, the controller 1 determines rotation directions of the first motor 11 and the second motor 12 and based on which of torque and rotation speed control of the second motor 12 is performed.

When the travel direction information indicates rotation of the wheel H in the forward rotation direction (forward traveling) and the speed change information indicates the first state, the controller 1 applies the torque control to the first motor 11 and the second motor 12. Specifically, the controller 1 sets the rotation direction of the first motor 11 to the forward rotation direction and sets the rotation direction of the second motor 12 to the backward rotation direction. In this case, the clutch apparatus 60 is in the braking state. In this case, a torque circulation state, in which torque circulation occurs between the first planetary gear mechanism 20 and the second planetary gear mechanism 30, is established.

When the travel direction information indicates rotation of the wheel H in the forward rotation direction (forward traveling) and the speed change information indicates the second state, the controller 1 applies the torque control to the first motor 11 and applies the rotation speed control to the second motor 12. Specifically, the controller 1 sets the rotation direction of the first motor 11 to the forward rotation direction and sets the rotation direction of the second motor 12 to the forward rotation direction or the backward rotation direction. In this case, the clutch apparatus 60 is in the non-braking state. In this case, a direct transmission state, in which torques of the first motor 11 and the second motor 12 are combined to be transmitted to the speed change mechanism input/output shaft 15, is established.

When the travel direction information indicates rotation of the wheel H in the backward rotation direction (backward traveling), the controller 1 applies the rotation speed control to the first motor 11 and the second motor 12. The controller 1 sets the rotation direction of the first motor 11 to the backward rotation direction and sets the rotation direction of the second motor 12 to the forward rotation direction. In this case, the clutch apparatus 60 is in the non-braking state.

The signal processor 2 uses the throttle information based on the accelerator operation amount and information indicating the rotation speeds of the first motor 11 and the second motor 12 detected by the first rotation angle detector 91 and the second rotation angle detector 92 in operation control of the first motor 11 and the second motor 12. Specifically, as illustrated in FIG. 2, for example, the signal processor 2 determines the operation mode indicating by which of the torque control and the rotation speed control the first motor 11 and the second motor 12 are operated and calculates a command value (a torque command value or a rotation speed command value) for operating each of the first motor 11 and the second motor 12. The signal processor 2 outputs a command indicating the operation mode (an operation mode command) and a command indicating the calculated command value (a torque command or a rotation speed command) to the inverter 3. The inverter 3 supplies electric power to the first motor 11 and the second motor 12 in accordance with the command from the signal processor 2. A relation among the throttle information, the rotation speeds of the first motor 11 and the second motor 12 indicated by detection results by the first rotation angle detector 91 and the second rotation angle detector 92, and operation of the first motor 11 and the second motor 12 is attributed to a mathematical expression stored in the signal processor 2 in advance, for example.

More specifically, the first rotation angle detector 91 and the second rotation angle detector 92 output rotation angle sensor values indicating rotation angles (absolute angles, for example) of the first motor 11 and the second motor 12, respectively, to the inverter 3. The inverter 3 outputs rotation speed signals to the signal processor 2 in accordance with the input rotation angle sensor values. The signal processor 2 performs feedback control of the first motor 11 and the second motor 12 with the input rotation speed signals. Specifically, the signal processor 2 adds correction based on the rotation speeds of the first motor 11 and the second motor 12 in calculating the torque command value or the rotation speed command value based on a relation between the throttle information and operation of the first motor 11 and the second motor 12, for example. With this correction, the first motor 11 and the second motor 12 can be controlled based on the status of the electric vehicle indicated by the rotation speeds of the first motor 11 and the second motor 12 as a result obtained by responding to an immediately preceding command.

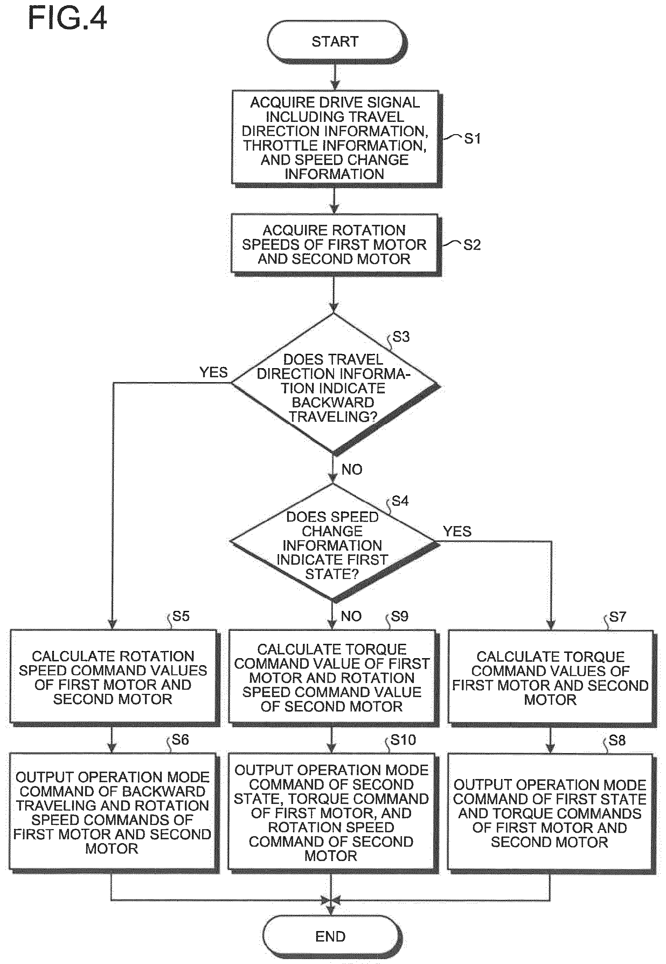

FIG. 4 is a flowchart of a branching example of control of the first motor 11 and the second motor 12 by the controller 1. The controller 1 acquires the drive signal SI including the travel direction information, the throttle information, and the speed change information (Step S1). Specifically, the signal processor 2 acquires the drive signal SI including the travel direction information, the throttle information, and the speed change information based on the accelerator operation amount determined in accordance with operation by a driver of the electric vehicle performed via the operating system OP such as the accelerator pedal AP and the shift lever SL, an operation position of the shift lever SL, and the like, for example. The controller 1 acquires the information indicating the rotation speeds of the first motor 11 and the second motor 12 (Step S2). Specifically, the rotation angle sensor values of the first motor 11 and the second motor 12 detected by the first rotation angle detector 91 and the second rotation angle detector 92 are output to the inverter 3, and the rotation speed signals corresponding to the rotation angle sensor values are output from the inverter 3 to the signal processor 2, for example. The processing at Step S1 and the processing at Step S2 are not in a particular order and can be performed in parallel.

The controller 1 performs processing corresponding to the operation mode indicated by the speed change information included in the drive signal SI. Specifically, as illustrated in FIG. 4, for example, the controller 1 branches processing in accordance with whether the travel direction information indicates backward traveling (Step S3) and, if the travel direction information does not indicate backward traveling (No at Step S3), whether the speed change information indicates the first state (Step S4) and thereby performs processing corresponding to the operation mode indicated by the speed change information. The processing at Step S3 and the processing at Step S4 are not in a particular order. Either the processing at Step S3 or the processing at Step S4 may determine whether the speed change information indicates the second state. As long as the branching of processing corresponding to the operation mode indicated by the speed change information can be achieved, the specific determination can be any content.

If the travel direction information indicates backward traveling (Yes at Step S3), the controller 1 calculates rotation speed command values of the first motor 11 and the second motor 12 based on the throttle information (Step S5). Specifically, the signal processor 2 calculates the rotation speed command values of the first motor 11 and the second motor 12, for example. Then the controller 1 outputs an operation mode command of backward traveling and rotation speed commands of the first motor 11 and the second motor 12 (Step S6). Specifically, the signal processor 2 outputs the operation mode command and the rotation speed commands to the inverter 3. The inverter 3 supplies electric power corresponding to the commands to the first motor 11 and the second motor 12, whereby currents corresponding to the commands pass through the first motor 11 and the second motor 12.

If the speed change information indicates the first state (Yes at Step S4), the controller 1 calculates torque command values of the first motor 11 and the second motor 12 based on the throttle information (Step S7). Specifically, the signal processor 2 calculates the torque command values of the first motor 11 and the second motor 12, for example. Then the controller 1 outputs an operation mode command of the first state and torque commands of the first motor 11 and the second motor 12 (Step S8). Specifically, the signal processor 2 outputs the operation mode command and the torque commands to the inverter 3. The inverter 3 supplies electric power corresponding to the commands to the first motor 11 and the second motor 12, whereby currents corresponding to the commands pass through the first motor 11 and the second motor 12.

If the speed change information does not indicate the first state (No at Step S4), that is, if the speed change information indicates the second state, the controller 1 calculates a torque command value of the first motor 11 and a rotation speed command value of the second motor 12 based on the throttle information (Step S9). Specifically, the signal processor 2 calculates the torque command value of the first motor 11 and calculates the rotation speed command value of the second motor 12 corresponding to the rotation speed of the first motor 11 obtained based on the rotation angle sensor value of the first motor 11 detected by the first rotation angle detector 91, for example. Then the controller 1 outputs an operation mode command of the second state and a torque command of the first motor 11 and a rotation speed command of the second motor 12 (Step S10). Specifically, the signal processor 2 outputs the operation mode command, the torque command, and the rotation speed command to the inverter 3. The inverter 3 supplies electric power corresponding to the commands to the first motor 11 and the second motor 12, whereby currents corresponding to the commands pass through the first motor 11 and the second motor 12.

The following describes operation states of the first motor 11 and the second motor 12 and operation states of the first planetary gear mechanism 20, the second planetary gear mechanism 30, and the clutch apparatus 60 for each operation mode in order of the first state, the second state, and backward traveling. In the present embodiment, switching between the second state and the first state can be performed during forward traveling. The following first describes the first state and the second state, exemplifies switching between the first state and the second state, and then describes backward traveling.

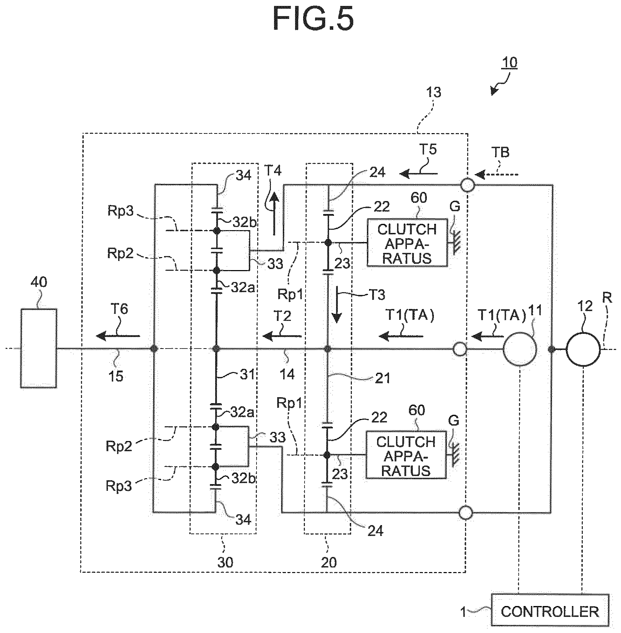

FIG. 5 is an illustrative diagram of paths through which torques are transmitted when the electric vehicle drive apparatus 10 according to the present embodiment is in the first state. The first state is what is called a low gear state and can increase a reduction ratio. In other words, in the first state, a torque transmitted to the speed change mechanism input/output shaft 15 is large. The first state is mainly used when the electric vehicle requires a large driving force during traveling. Examples of a case in which a large driving force is required include when the electric vehicle starts on a slope and when it climbs a hill (when it climbs a slope) . In the first state, torques produced in the first motor 11 and the second motor 12 are equal in magnitude and are opposite in direction. The torque produced in the first motor 11 is input to the first sun gear 21. The torque produced in the second motor 12 is input to the first ring gear 24. In the first state, the clutch apparatus 60 is in the braking state. In other words, in the first state, the first pinion gear 22 can rotate on its axis but cannot revolve.

In the first state, a torque output by the first motor 11 is named a first torque T1, whereas a torque output by the second motor 12 is named a second torque T5. The first torque T1 output from the first motor 11 is input to the first sun gear 21 via the sun gear shaft 14. The first torque T1 merges with a circulating torque T3 at the first sun gear 21 to be a resultant torque T2. The resultant torque T2 is output from the first sun gear 21. The circulating torque T3 is a torque transmitted from the first ring gear 24 to the first sun gear 21.

The first sun gear 21 and the second sun gear 31 are coupled to each other via the sun gear shaft 14. Consequently, in the first state, the resultant torque T2 output from the first sun gear 21 is transmitted to the second sun gear 31 via the sun gear shaft 14. The resultant torque T2 is amplified by the second planetary gear mechanism 30. The resultant torque T2 is distributed to a first distributed torque T6 and a second distributed torque T4 by the second planetary gear mechanism 30. The first distributed torque T6 is a torque originating from the resultant torque T2, which is distributed to the second ring gear 34 and is amplified, and is output from the speed change mechanism input/output shaft 15. The second distributed torque T4 is a torque originating from the resultant torque T2, which is distributed to the second carrier 33 and is amplified.

The first distributed torque T6 is output from the speed change mechanism input/output shaft 15 to the reduction mechanism 40. The first distributed torque T6 is then amplified by the reduction mechanism 40 and is output to the wheel H via the wheel input/output shaft 16 illustrated in FIG. 1. Consequently, the electric vehicle travels.

The second carrier 33 and the first ring gear 24 integrally rotate. The second distributed torque T4 distributed to the second carrier 33 is combined with the second torque T5 of the second motor 12 at the first ring gear 24. The direction of the second torque T5 (the torque of the second motor 12) is opposite to the direction of the torque of the first motor 11.

The first planetary gear mechanism 20 reduces the magnitude of a resultant torque of the second torque T5 and the second distributed torque T4 that has returned to the first ring gear 24 and reverses the direction of the resultant torque of the second torque T5 and the second distributed torque T4. The resultant torque of the second torque T5 and the second distributed torque T4 becomes the circulating torque T3 at the first sun gear 21. Thus, torque circulation occurs between the first planetary gear mechanism 20 and the second planetary gear mechanism 30, and the speed change mechanism 13 can increase the reduction ratio. In other words, the electric vehicle drive apparatus 10 can produce a large torque in the first state.

The magnitude of the various kinds of torques in the first state responds to the throttle information, for example. Specifically, the signal processor 2 determines a first command value as a torque command value in the forward rotation direction of the first motor 11 based on the throttle information. The signal processor 2 determines a second command value as a torque command value in the backward rotation direction of the second motor 12 based on the throttle information. The signal processor 2 outputs the first command value and the second command value to the inverter 3. The inverter 3 supplies electric power to the first motor 11 and the second motor 12 in accordance with the first command value and the second command value, whereby the first motor 11 and the second motor 12 operate in accordance with the first command value and the second command value. Thus, when the speed change information indicates the first state, the controller 1 determines the first command value as the torque command value in the forward rotation direction of the first motor 11 based on the throttle information to operate the first motor 11 in accordance with the first command value and determines the second command value as the torque command value in the backward rotation direction of the second motor 12 based on the throttle information to operate the second motor 12 in accordance with the second command value. A rotation speed ratio between the first motor 11 and the second motor 12 in the first state is uniquely determined by the ratio between the number of teeth of the first sun gear 21 and the number of teeth of the first ring gear 24 of the first planetary gear mechanism 20 described below.

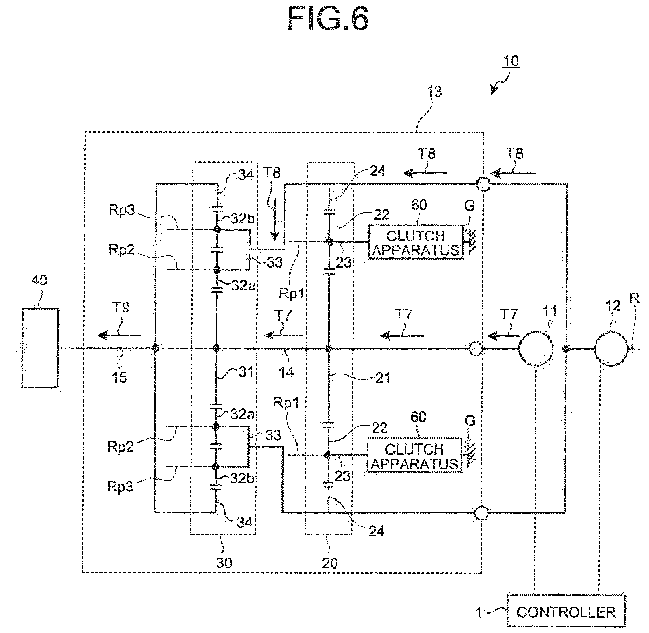

FIG. 6 is a schematic diagram of paths through which torques are transmitted when the electric vehicle drive apparatus 10 according to the present embodiment is in the second state. The second state is what is called a high gear state and can reduce the reduction ratio. In other words, a torque transmitted to the speed change mechanism input/output shaft 15 is small, but the speed change mechanism 13 reduces in frictional loss. In the second state, torques produced by the first motor 11 and the second motor 12 are equal in magnitude and direction. In the second state, a torque output by the first motor 11 is named a first torque T7, whereas a torque output by the second motor 12 is named a second torque T8. The resultant torque T9 illustrated in FIG. 6 is a torque output from the speed change mechanism input/output shaft 15 and transmitted to the reduction mechanism 40.

In the second state, the torque of the first motor 11 is input to the first sun gear 21, whereas the torque of the second motor 12 is input to the first ring gear 24. In the second state, the clutch apparatus 60 is in the non-braking state. In other words, in the second state, the first pinion gear 22 can rotate on its axis and can revolve. Consequently, in the second state, the torque circulation between the first planetary gear mechanism 20 and the second planetary gear mechanism 30 is interrupted. In the second state, the first carrier 23 can revolve, and the first sun gear 21 and the first ring gear 24 can relatively freely rotate on their respective axes.

In the second state, the ratio of the second torque T8 to the first torque T7 is determined by the ratio of the number of teeth of the second ring gear 34 to the number of teeth of the second sun gear 31. The first torque T7 merges with the second torque T8 at the second carrier 33. Consequently, the resultant torque T9 is transmitted to the second ring gear 34.

The angular velocity of the speed change mechanism input/output shaft 15 is determined by an angular velocity of the second sun gear 31 driven by the first motor 11 and an angular velocity of the second carrier 33 driven by the second motor 12. Consequently, even when the angular velocity of the speed change mechanism input/output shaft 15 is kept constant, a combination of the angular velocity of the first motor 11 and the angular velocity of the second motor 12 can be changed.

Thus, a combination of the angular velocity of the speed change mechanism input/output shaft 15, the angular velocity of the first motor 11, and the angular velocity of the second motor 12 is not uniquely determined. Consequently, when the controller 1 controls the angular velocity of the first motor 11 and the angular velocity of the second motor 12 continuously and smoothly, what is called speed change shock is reduced even when the speed change mechanism 13 changes its state between the first state and the second state.

When the angular velocity of the second sun gear 31 is kept constant, a higher angular velocity of the second carrier 33 gives a lower angular velocity of the second ring gear 34. A lower angular velocity of the second carrier 33 gives a higher angular velocity of the second ring gear 34. Consequently, the angular velocity of the second ring gear 34 continuously changes in accordance with the angular velocity of the second sun gear 31 and the angular velocity of the second carrier 33. Consequently, the electric vehicle drive apparatus 10 changes an angular velocity of the second torque T8 output by the second motor 12 and can thereby continuously change the reduction ratio.

When attempting to keep the angular velocity of the second ring gear 34 constant, the electric vehicle drive apparatus 10 has a plurality of combinations of an angular velocity of the first torque T7 output by the first motor 11 and the angular velocity of the second torque T8 output by the second motor 12. In other words, even when the angular velocity of the first torque T7 output by the first motor 11 changes, for example, the angular velocity of the second torque T8 output by the second motor 12 changes, whereby the angular velocity of the second ring gear 34 is kept constant. Consequently, when switching from the first state to the second state, the electric vehicle drive apparatus 10 can reduce a change in the angular velocity of the second ring gear 34. Consequently, the electric vehicle drive apparatus 10 can reduce speed change shock.

The magnitude of the various kinds of torques in the second state responds to the throttle information, for example. Specifically, the signal processor 2 determines a torque command value in the forward rotation direction of the first motor 11 based on the throttle information. The signal processor 2 determines a rotation speed command value including information indicating the rotation direction of the second motor 12 based on the throttle information and the rotation speed of the first motor 11 detected by the first rotation angle detector 91. More specifically, the rotation speed command value being positive (+) indicates that the rotation direction of the second motor 12 is the forward rotation direction, for example. In contrast, the rotation speed command value being negative (-) indicates that the rotation direction of the second motor 12 is the backward rotation direction. A larger difference of the rotation speed of the second motor 12 relative to the positive (+) rotation speed of the first motor 11 increases a rotation speed of the speed change mechanism input/output shaft 15 and thereby increases the rotation speed of the wheel H.

The signal processor 2 outputs the torque command value and the rotation speed command value to the inverter 3. The inverter 3 supplies electric power to the first motor 11 and the second motor 12 in accordance with the torque command value and the rotation speed command value, whereby the first motor 11 and the second motor 12 operate in accordance with the torque command value and the rotation speed command value. Thus, when the speed change information indicates the second state, the controller 1 determines the torque command value in the forward rotation direction of the first motor 11 based on the throttle information to operate the first motor 11 in accordance with the torque command value and determines the rotation speed command value corresponding to the rotation speed of the first motor 11 detected by the first rotation angle detector 91 functioning as a detector to operate the second motor 12 in accordance with the rotation speed command value.

An ideal state in the second state is a state in which the rotation direction and the rotation speed of the first motor 11 and the rotation direction and the rotation speed of the second motor 12 match. For this purpose, the first motor 11 is subjected to the torque control in the second state, whereas the second motor 12 is subjected to the rotation speed control in accordance with the rotation speed of the first motor 11, whereby the rotation direction and the rotation speed of the first motor 11 and the rotation direction and the rotation speed of the second motor 12 can be matched without requiring to design any complicated control system for matching the rotation of the second motor 12 to that of the first motor 11.

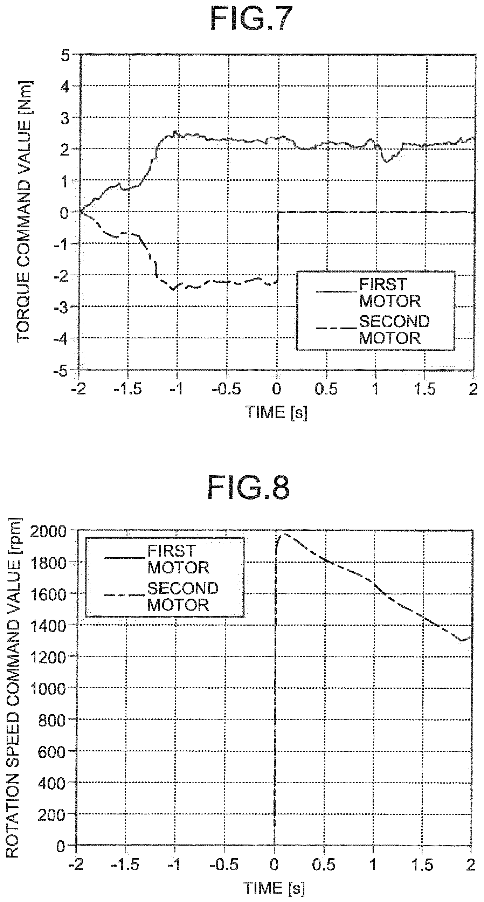

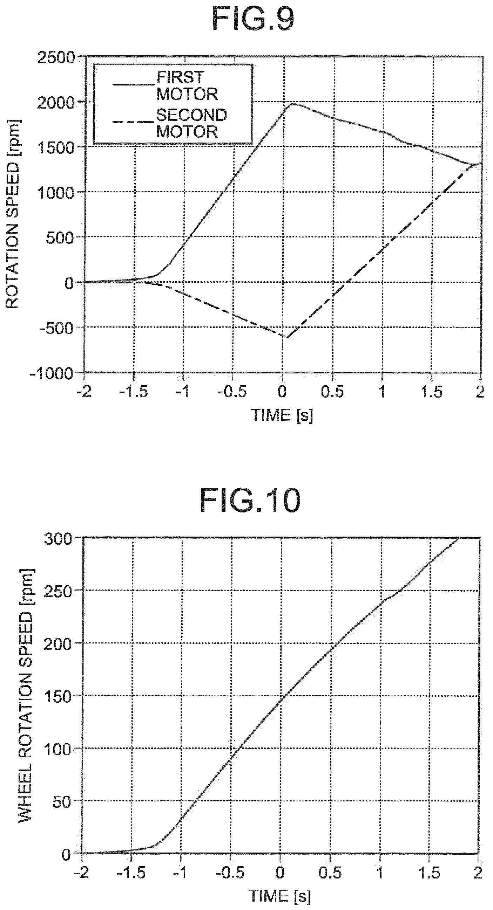

FIG. 7 is a graph of a transition example of torque command values to the first motor 11 and the second motor 12 when the first state has switched to the second state. FIG. 8 is a graph of a transition example of rotation speed command values to the first motor 11 and the second motor 12 when the first state has switched to the second state. FIG. 9 is a graph of a transition example of rotation speeds of the first motor 11 and the second motor 12 when the first state has switched to the second state. FIG. 10 is a graph of transition in a wheel rotation speed corresponding to the transition in the rotation speeds of the first motor 11 and the second motor 12 illustrated in FIG. 9. FIG. 7 to FIG. 10 exemplify cases in which the speed change information has switched from the first state to the second state at a point in time of "0" on the horizontal axis (second) (a first switching point in time).

In the examples illustrated in FIG. 7 to FIG. 10, the signal processor 2 switches the control of the second motor 12 from the torque control to the rotation speed control at the first switching point in time, refers to the rotation speed of the first motor 11 at the point time detected by the first rotation angle detector 91, and determines a rotation speed command value for synchronizing the rotation speed of the second motor 12 with the rotation speed of the first motor 11. When the torque direction of the second motor 12 has changed (refer to FIG. 6) at the first switching point in time, braking by the clutch apparatus 60 is released, and the first state switches to the second state. Before and after switching, there is no abrupt change in the rotation speed of the wheel H connected to the electric vehicle drive apparatus 10. Thus, in switching, the electric vehicle drive apparatus 10 performs speed change in a shockless manner.

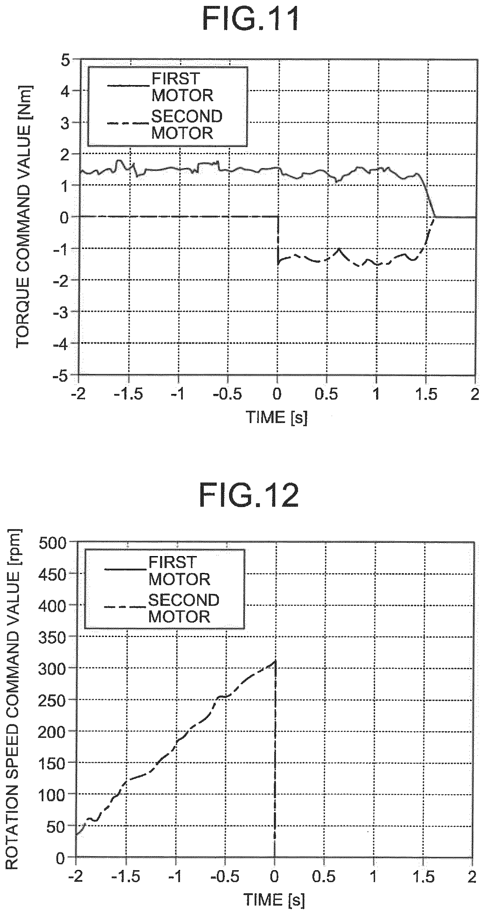

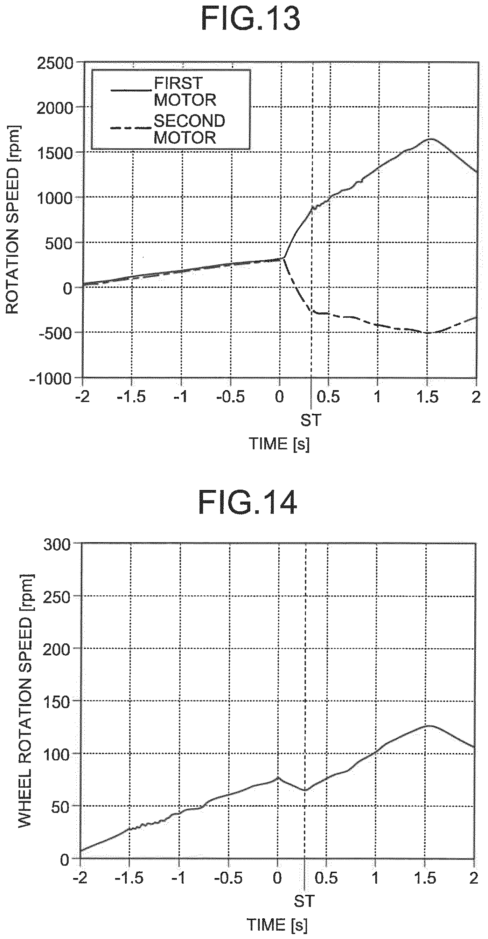

FIG. 11 is a graph of a transition example of torque command values to the first motor 11 and the second motor 12 when the second state has switched to the first state. FIG. 12 is a graph of a transition example of rotation speed command values to the first motor 11 and the second motor 12 when the second state has switched to the first state. FIG. 13 is a graph of a transition example of rotation speeds of the first motor 11 and the second motor 12 when the second state has switched to the first state. FIG. 14 is a graph of transition in a wheel rotation speed corresponding to the transition in the rotation speeds of the first motor 11 and the second motor 12 illustrated in FIG. 13. FIG. 11 to FIG. 14 exemplify cases in which the speed change information has switched from the second state to the first state at a point in time of "0" on the horizontal axis (second) (a second switching point in time).

In the examples illustrated in FIG. 11 to FIG. 14, the signal processor 2 switches the second motor 12 from the rotation speed control to the torque control at the second switching point in time. When the rotation speed in the backward direction of the second motor 12 has reached a certain point by being switched to the first state, braking by the clutch apparatus 60 occurs to make transition to the first state. In the example illustrated in FIG. 14, there is a change in wheel rotation during a time from a state in which braking by the clutch apparatus 60 does not occur before the second switching point in time to a timing of ST at which braking by the clutch apparatus 60 occurs after the second switching point in time. During this time, the electric vehicle drive apparatus 10 operates in the second state. This is caused by the inertia of the second motor 12, which is because a time difference occurs after input of the speed change information until braking by the clutch apparatus 60 is performed. The length of this time can be adjusted to any length by controlling the magnitude of the torque command value of the second motor 12 immediately after switching from the second state to the first state, and the adjustment can reduce shock during speed changing.

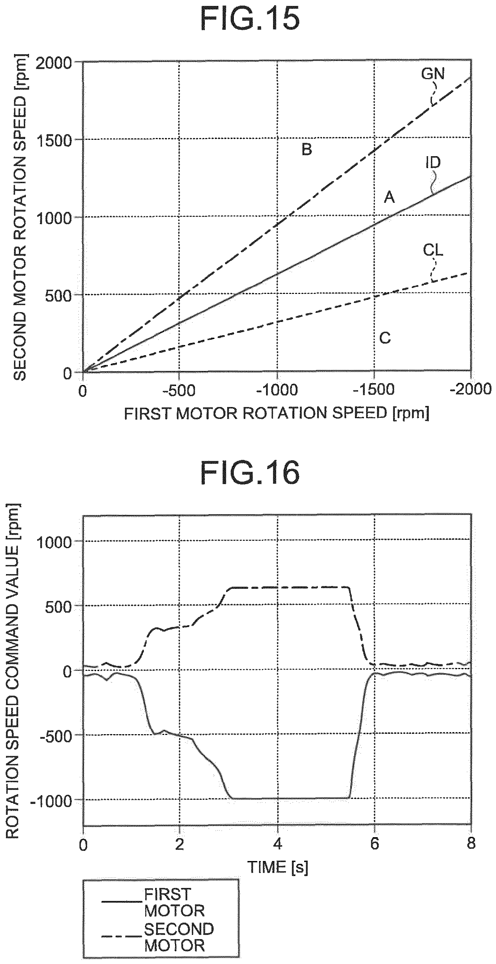

FIG. 15 is a graph illustrating a case in which backward traveling is established and a case in which backward traveling is not established in a distinguished manner for a combination of the rotation speeds of the respective first motor 11 and second motor 12. In the present embodiment, when the drive signal SI of the wheel H includes information directing rotation of the wheel H in the backward rotation direction, the controller 1 outputs a rotation speed command in the backward rotation direction to the first motor 11 and outputs a rotation speed command in the forward rotation direction to the second motor 12 to rotate the first motor 11 in a backward rotation direction opposite to a certain forward rotation direction and to rotate the second motor 12 in the forward rotation direction. When a correspondence relation between the rotation speeds of the respective first motor 11 and second motor 12 falls under a range A, which is below a dash-single-dot line GN and a broken line CL or more of the graph illustrated in FIG. 15, backward traveling is established, and the speed change mechanism input/output shaft 15 rotates in the backward rotation direction. When the correspondence relation between the rotation speeds of the respective first motor 11 and second motor 12 is on the dash-single-dot line GN, the second ring gear 34 does not rotate, which establishes what is called geared neutral and does not establish backward traveling. When the correspondence relation between the rotation speeds of the respective first motor 11 and second motor 12 falls under a range B, which is above the dash-single-dot line GN, the second ring gear 34 rotates in the forward traveling direction, and backward traveling is not established. When the correspondence relation between the rotation speeds of the respective first motor 11 and second motor 12 falls under a range C, which is below the broken line CL, braking by the clutch apparatus 60 makes the speed change mechanism input/output shaft 15 unable to rotate in the backward rotation direction, and backward traveling is not established.

A relation between the ranges A, B, and C in FIG. 15, that is, the rotation speeds of the respective first motor 11 and second motor 12 and the establishment or not of backward traveling responds to a reduction ratio of the first planetary gear mechanism 20 and a reduction ratio of the second planetary gear mechanism 30. Specifically, when the rotation speed of the first motor 11 is $N_{MA}$, the rotation speed of the second motor 12 is $N_{MB}$, the reduction ratio of the first planetary gear mechanism 20 is $i_1$, and the reduction ratio of the second planetary gear mechanism 30 is $i_2$, the controller 1 determines $N_{MB}$ within a range indicated by Expression (1):

$$-\frac{1}{i_1} \times N_{MA} \leq N_{MB} < \left(\frac{1}{1-i_2}\right) \times N_{MA} \tag{1}$$

Although details will be described below, when $N_{MB}$ is determined within the range indicated by Expression (1), the following Expression (2) and Expression (3) may be used:

$$D_{MA} = \Delta t \cdot \alpha + X_{i-1} \tag{2}$$

$$D_{MB} = \Delta t \cdot \beta + Y_{i-1} \tag{3}$$

When the number of teeth of the first sun gear 21 is $Z_{S1}$, the number of teeth of the first ring gear 24 is $Z_{R1}$, the number of teeth of the second sun gear 31 is $Z_{S2}$, and the number of teeth of the second ring gear 34 is $Z_{R2}$, $i_1$ is represented by Expression (4), whereas $i_2$ is represented by Expression (5):

$$i_1 = {Z_{R1}}/{Z_{S1}} \tag{4}$$

$$i_2 = {Z_{R2}}/{Z_{S2}} \tag{5}$$

The following describes matters related to backward traveling in more detail. When a rotation speed of the second sun gear 31 of the second planetary gear mechanism 30 is $N_{S2}$, a rotation speed of the second carrier 33 is $N_{C2}$, and a rotation speed of the second ring gear 34 is $N_{R2}$, $N_{R2}$ is represented by Expression (6):

$$N_{R2} = \frac{N_{S2} - N_{C2}}{i_2} + N_{C2} \tag{6}$$

The rotation speed ($N_{S2}$) of the second sun gear 31 is equal to the rotation speed ($N_{MA}$) of the first motor 11. The rotation speed ($N_{C2}$) of the second carrier 33 is equal to the rotation speed ($N_{MB}$) of the second motor 12. Consequently, Expression (6) can be rewritten as Expression (7):

$$N_{R2} = \frac{N_{MA} - N_{MB}}{i_2} + N_{MB} \tag{7}$$

When the rotation speed ($N_{R2}$) of the second ring gear 34 is zero ($N_{R2}$ = 0), what is called geared neutral is established and backward traveling is not established. When the rotation speed ($N_{R2}$) of the second ring gear 34 exceeds zero ($N_{R2}$ > 0), the second ring gear 34 rotates in the forward traveling direction. Consequently, in order for backward traveling to be established, the rotation speed ($N_{R2}$) of the second ring gear 34 is required to be less than zero ($N_{R2}$ < 0). For this purpose, the rotation speed ($N_{MB}$) of the second motor 12 is required to satisfy Expression (8) in connection with the rotation speed ($N_{MA}$) of the first motor 11 based on Expression (7). FIG. 15 exemplifies a case in which on the dash-single-dot line GN, $N_{R2}$ = 0 is satisfied to establish geared neutral, and in the range B positioned above the dash-single-dot line GN, $N_{R2}$ > 0 is satisfied, and the second ring gear 34 rotates in the forward traveling direction.

$$N_{MB} < \left(\frac{1}{1 - i_2}\right) \times N_{MA} \tag{8}$$

When a rotation speed of the first carrier 23 of the first planetary gear mechanism 20 is $N_{C1}$, $N_{C1}$ is represented by Expression (9):

$$N_{C1} = \frac{N_{MA} + i_1 N_{MB}}{i_1 + 1} \tag{9}$$

When the rotation speed ($N_{C1}$) of the first carrier 23 is less than zero ($N_{C1}$ < 0), the clutch apparatus 60 brakes the rotation of the first carrier 23. Consequently, the rotation speed ($N_{C1}$) of the first carrier 23 is required to be zero or more ($N_{C1} \geq 0$). For this purpose, the rotation speed ($N_{MB}$) of the second motor 12 is required to satisfy Expression (10) in connection with the rotation speed ($N_{MA}$) of the first motor 11 based on Expression (9). FIG. 15 exemplifies a case in which the range C positioned below the broken line CL is a range that does not satisfy Expression (10).

$$N_{MB} \geq -\frac{1}{i_1} \times N_{MA} \tag{10}$$

From Expression (8) and Expression (10), backward traveling is established when the rotation speed ($N_{MA}$) of the first motor 11 and the rotation speed ($N_{MB}$) of the second motor 12 satisfy Expression (1). Expression (1) corresponds to the range A in FIG. 15. As indicated by the description referring to Expression (1) to Expression (10), the relation between the rotation speed ($N_{MA}$) of the first motor 11 and the rotation speed ($N_{MB}$) of the second motor 12 indicated by each of the ranges A, B, and C illustrated in FIG. 15 in the present embodiment is uniquely determined by the number of teeth ($Z_{S1}$) of the first sun gear 21, the number of teeth ($Z_{R1}$) of the first ring gear 24, the number of teeth ($Z_{S2}$) of the second sun gear 31, and the number of teeth ($Z_{R2}$) of the second ring gear 34.

An ideal drive state of the electric vehicle drive apparatus 10 in backward traveling is a state driven with the rotation speed ($N_{MA}$) of the first motor 11 and the rotation speed ($N_{MB}$) of the second motor 12 maintaining a constant ratio within the range A regardless of a backward traveling speed. For this purpose, in the present embodiment, both the first motor 11 and the second motor 12 are subjected to the rotation speed control in backward traveling, whereby the rotation speed ratio between the rotation speed ($N_{MA}$) of the first motor 11 and the rotation speed ($N_{MB}$) of the second motor 12 is maintained constant. With this control, backward traveling can be achieved by operation control of the first motor 11 and the second motor 12 by the controller 1 that also enables forward traveling without requiring to design a complicated control system dedicated to backward traveling.

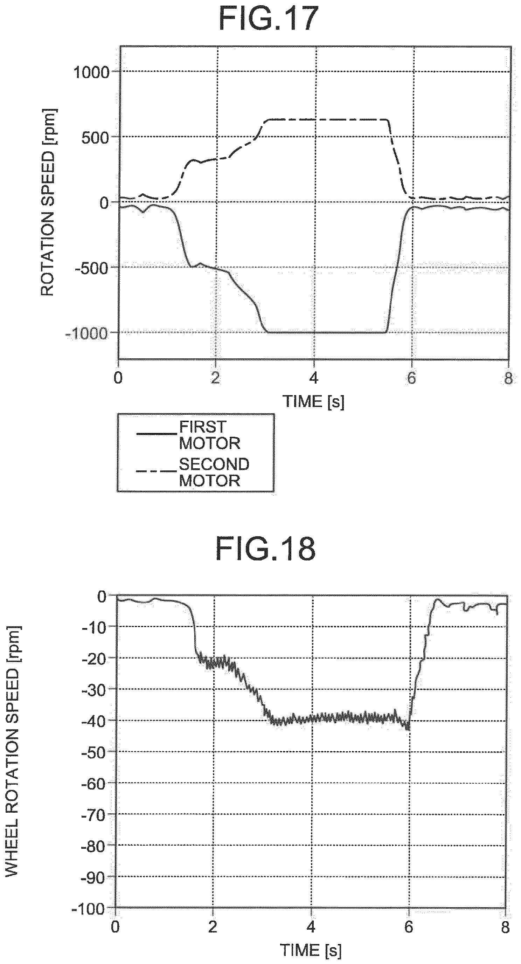

FIG. 16 is a graph of a transition example of rotation speed command values to the first motor 11 and the second motor 12 during backward traveling. FIG. 17 is a graph of a transition example of rotation speeds of the first motor 11 and the second motor 12 during backward traveling. FIG. 18 is a graph of transition in a wheel rotation speed corresponding to the transition in the rotation speeds of the first motor 11 and the second motor 12 illustrated in FIG. 17. In the present embodiment, the controller 1 determines the rotation speed ($N_{MA}$) of the first motor 11 and the rotation speed ($N_{MB}$) of the second motor 12 such that the rotation speed ($N_{MB}$) of the second motor 12 is a median within the range of Expression (1). Specifically, the signal processor 2 determines the rotation speed ($N_{MA}$) of the first motor 11 and the rotation speed ($N_{MB}$) of the second motor 12 such that the relation between the rotation speed ($N_{MA}$) of the first motor 11 and the rotation speed ($N_{MB}$) of the second motor 12 indicated by a straight ling graph ID within the range A in FIG. 15 is satisfied, for example, and sets them as rotation speed command values. More specifically, the signal processor 2 determines the rotation speed ($N_{MA}$) of the first motor 11 based on the throttle information and employs a value obtained by dividing the sum of the right side of Expression (8) and the right side of Expression (10) by 2 as the rotation speed ($N_{MB}$) of the second motor 12, for example. This aims to prevent the relation between the rotation speeds of the first motor 11 and the second motor 12 from becoming a relation that does not satisfy (1), that is, a state deviated from the range A regardless of the backward traveling speed. In particular, a lower backward traveling speed gives a narrower permissible range of the rotation speed ($N_{MB}$) of the second motor 12 corresponding to the range A relative to the rotation speed ($N_{MA}$) of the first motor 11, and the controller 1 determines the rotation speed ($N_{MA}$) of the first motor 11 and the rotation speed ($N_{MB}$) of the second motor 12 such that the rotation speed ($N_{MB}$) of the second motor 12 is the median within the range of Expression (1), whereby deviation from the permissible range can be prevented more surely.

The following describes a method for calculating the rotation speed command value during backward traveling. The rotation speed command value is a value indicating the rotation speed of a motor (the first motor 11 or the second motor 12) indicated by the rotation speed command. The signal processor 2 determines a rotation speed command value ($D_{MA}$) of the first motor 11 such that the rotation speed ($N_{MA}$) of the first motor 11 is obtained. More specifically, the signal processor 2 determines the rotation speed command value ($D_{MA}$) such that the first motor 11 operates with the rotation speed ($N_{MA}$) by electric power supplied to the first motor 11 by the inverter 3 in accordance with the rotation speed command value ($D_{MA}$) of the first motor 11. A load such as a wheel (the wheel H) is coupled to the first motor 11. For this reason, the rotation speed command value ($D_{MA}$) of the first motor 11 and the rotation speed ($N_{MA}$) of the first motor 11 do not strictly match. In other words, the signal processor 2 determines the rotation speed command value ($D_{MA}$) of the first motor 11 such that the first motor 11 operates with the rotation speed ($N_{MA}$) in the end in accordance with the rotation speed command value ($D_{MA}$) of the first motor 11. In a similar way to such a relation between the rotation speed command value ($D_{MA}$) and the rotation speed ($N_{MA}$) of the first motor 11, the signal processor 2 determines a rotation speed command value ($D_{MB}$) of the second motor 12 such that the rotation speed ($N_{MB}$) of the second motor 12 is obtained. Thus, the rotation speed command value ($D_{MA}$) of the first motor 11 is a value (a rotation speed) indicated by the rotation speed command output in order to obtain the rotation speed ($N_{MA}$) of the first motor 11. The rotation speed command value ($D_{MB}$) of the second motor 12 is a value (a rotation speed) indicated by the rotation speed command output in order to obtain the rotation speed ($N_{MB}$) of the second motor 12.

A differential value ($R_1$) of the rotation speed command value of the first motor 11 is represented by the following Expression (11). The symbol $X_{i-1}$ in Expression (11) is a one-step earlier rotation speed command value of the first motor 11. An initial value of the one-step earlier rotation speed command value ($X_{i-1}$) of the first motor 11 is any value. When backward traveling has started from a stationary state, the one-step earlier rotation speed command value ($X_{i-1}$) of the first motor 11 is zero, for example. The symbol $X_i$ in Expression (11) is a rotation speed command value for the first motor 11 at a current step corresponding to the throttle information.

$$R_1 = \frac{X_i - X_{i-1}}{t_i - t_{i-1}} \qquad (11)$$

The symbol $t_i$ in Expression (11) and Expression (12) described below is a time corresponding to timing when one certain step is performed. The step refers to each of a plurality of rotation speed commands to each of the motors repeated on a certain cycle. The certain cycle is set based on a clock signal obtained from a circuit of the signal processor 2, for example. The symbol $t_{i-1}$ in Expression (11) and Expression (12) is a time corresponding to timing when a step immediately before the step at $t_i$ is performed. The symbol $t_i$-$t_{i-1}$ in Expression (11) and Expression (12) indicates an elapsed time ($\Delta t$) between two consecutive steps. The elapsed time is denoted by $\Delta t$ in Expression (2) and Expression (3) described below. In other words, $\Delta t = t_i$-$t_{i-1}$. In the present embodiment, the lapsed time ($\Delta t$) between two consecutive steps is treated as a certain unit time. The symbol $R_1$ represents a change in the rotation speed of the first motor 11 per the certain unit time.

A differential value ($R_2$) of the rotation speed command value of the second motor 12 is represented by the following Expression (12). The symbol $Y_{i-1}$ in Expression (12) is a one-step earlier rotation speed command value of the second motor 12. An initial value of the one-step earlier rotation speed command value ($Y_{i-1}$) of the second motor 12 is any value. When backward traveling has started from a stationary state, the one-step earlier rotation speed command value ($Y_{i-1}$) of the second motor 12 is zero, for example. The symbol $Y_i$ in Expression (12) is a rotation speed command value for the second motor 12 at a current step corresponding to the throttle information. The symbol $R_2$ represents a change in the rotation speed of the second motor 12 per the certain unit time.

$$R_2 = \frac{Y_i - Y_{i-1}}{t_i - t_{i-1}} \qquad (12)$$

The signal processor 2 compares the differential value ($R_1$) in Expression (11) and a rising rate of change ($\alpha$) of the rotation speed command set to any value with each other. If $R_1 > \alpha$, the signal processor 2 calculates the rotation speed command value ($D_{MA}$) of the first motor 11 as in the following Expression (2):

$$D_{MA} = \Delta t \cdot \alpha + X_{i-1} \qquad (2)$$

The signal processor 2 compares the differential value ($R_2$) in Expression (12) and a falling rate of change ($\beta$) of the rotation speed command set to any value with each other. If $R_2 < \beta$, the signal processor 2 calculates the rotation speed command value ($D_{MB}$) as in the following Expression (3):

$$D_{MB} = \Delta t \cdot \beta + Y_{i-1} \qquad (3)$$

Thus, during backward traveling, that is, when the first motor 11 rotates in the backward rotation direction and the second motor 12 rotates in the forward rotation direction, the controller 1 calculates the rotation speed command value ($D_{MA}$) for the first motor 11 by Expression (2) when $R_1 > \alpha$ holds true and calculates the rotation speed command value ($D_{MB}$) for the second motor 12 by Expression (3) when $R_2 < \beta$ holds true.

The rising rate of change ($\alpha$) indicates a rate of change of the rotation speed in the forward rotation direction. The falling rate of change ($\beta$) indicates a rate of change of the rotation speed in the backward rotation direction. The case in which $R_1 > \alpha$ and $R_2 < \beta$ are satisfied is a case in which an accelerator operation is lost (or the accelerator pedal AP is operated to considerably reduce the accelerator operation amount) during backward traveling, whereby an abrupt reduction in acceleration occurs, in which acceleration indicated by the throttle information becomes zero or a small value near zero, and the rotation speeds of the first motor 11 and the second motor 12 abruptly reduce, for example. During backward traveling, the first motor 11 is driven to rotate in the backward rotation direction, and when the acceleration of the electric vehicle during backward traveling abruptly reduces, the first motor 11 reduces in the rotation speed in the backward rotation direction, and the rotation speed changes to the forward rotation direction (rises). During backward traveling, the second motor 12 is driven to rotate in the forward rotation direction, and when the acceleration of the electric vehicle during backward traveling abruptly reduces, the second motor 12 reduces in the rotation speed in the forward rotation direction, and the rotation speed changes to the backward rotation direction (falls). Consequently, at the time of such an abrupt reduction in acceleration, $R_1 > \alpha$ and $R_2 < \beta$ are likely to be satisfied.

At the time of an abrupt reduction in acceleration during backward traveling, when operation control of the first motor 11 and the second motor 12 simply following the throttle information corresponding to an operation on the accelerator pedal AP is performed, the rotation speed control of the wheel H causing the electric vehicle to abruptly brake or abruptly stop regardless of the presence of a braking operation on the electric vehicle may be performed. Given these circumstances, when $R_1 > \alpha$ is satisfied, the signal processor 2 determines the rotation speed command value ($D_{MA}$) of the first motor 11 by Expression (2). When $R_2 < \beta$ is satisfied, the signal processor 2 determines the rotation speed command value ($D_{MB}$) of the second motor 12 by Expression (3). With this control, the degree of a speed reduction when the acceleration abruptly reduces during backward traveling can be determined to be any degree in accordance with $\alpha$ and $\beta$. Smaller $\alpha$ and $\beta$ give a milder degree of a reduction in the backward traveling speed of the electric vehicle.

Thus, the rotation speed control corresponding to the setting of $\alpha$ and $\beta$ is performed, whereby the rotation speed command with a rate of change limited in any manner not depending on the throttle information alone can be performed. When the acceleration abruptly reduces during backward traveling, the rotation speed command that does not depend on the rotation speed indicated by the throttle information and mildly changes can be given to the inverter 3, and a feeling of an abrupt speed reduction as if a brake pedal were pressed at the instant of closing throttle during backward traveling can be prevented from occurring, for example. Consequently, the degree of a reduction in the backward traveling speed of the electric vehicle at the time of an abrupt reduction in acceleration is easily made milder. Thus, the present embodiment does not abruptly change the rotation speed of the wheel H even when an abrupt reduction in acceleration occurs and can improve vehicle operability.

In the present embodiment, when $R_1 \leq \alpha$ and $R_2 \geq \beta$, the signal processor 2 performs operation control of the first motor 11 and the second motor 12 following the throttle information corresponding to an operation on the accelerator pedal AP. Specifically, when $R_1 \leq \alpha$ and $R_2 \geq \beta$, the signal processor 2 determines the rotation speed command value ($D_{MA}$) of the first motor 11 and the rotation speed command value ($D_{MB}$) of the second motor 12 corresponding to the throttle information within a range satisfying Expression (1).

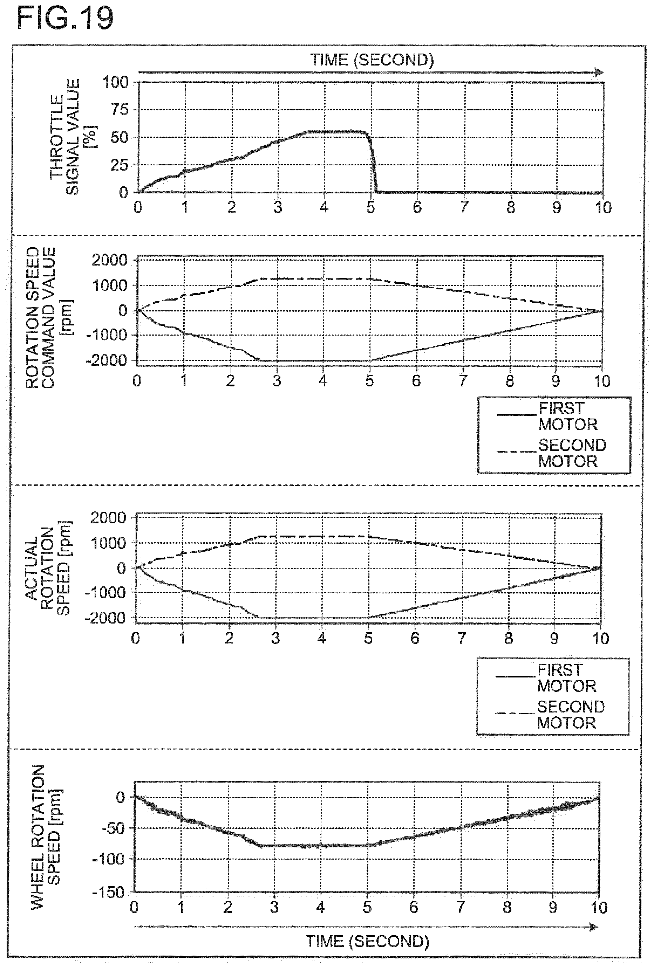

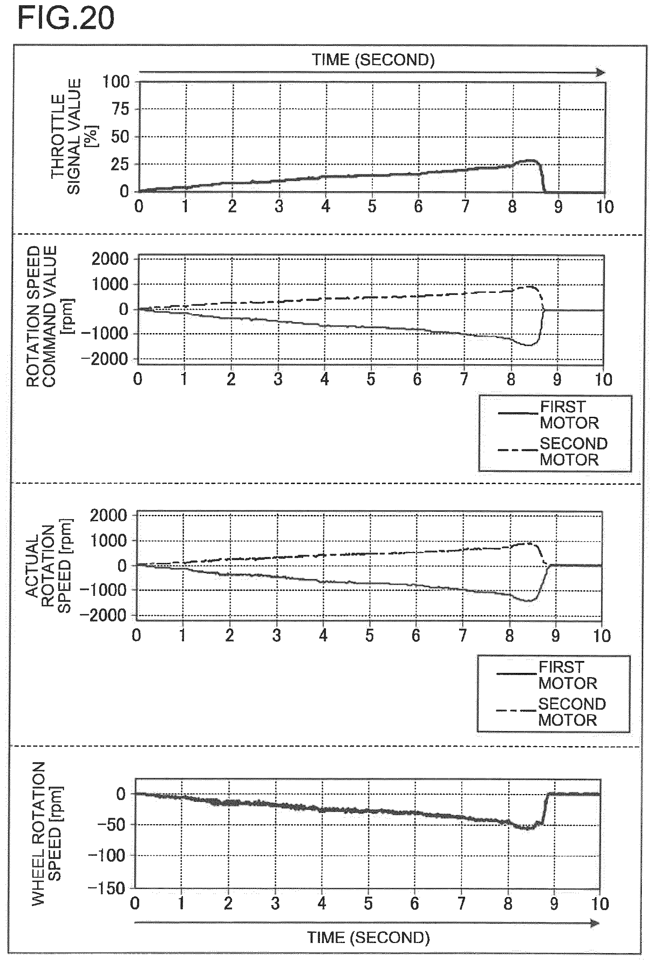

FIG. 19 illustrates graphs of a throttle signal value, rotation speed command values for the respective motors, actual rotation speeds of the respective motors, and a wheel rotation speed in an example in which operation control of the first motor 11 and the second motor 12 corresponding to preset $\alpha$ and $\beta$ is performed. FIG. 20 illustrates graphs of a throttle signal value, rotation speed command values for the respective motors, actual rotation speeds of the respective motors, and a wheel rotation speed in a comparative example in which operation control of the first motor 11 and the second motor 12 simply following the throttle information corresponding to an operation on the accelerator pedal AP is performed. The graphs in FIG. 19 and FIG. 20 are graphs related to operation control of the first motor 11 and the second motor 12 driving the wheel H of a front left wheel.

During backward traveling, the wheel H is rotatingly driven in the backward rotation direction. During backward traveling, the rotation speed control is applied to both the first motor 11 and the second motor 12. In the example illustrated in FIG. 19, when $R_1 \leq \alpha$ and $R_2 \geq \beta$, the signal processor 2 determines the rotation speed command value ($D_{MA}$) of the first motor 11 and the rotation speed command value ($D_{MB}$) of the second motor 12 corresponding to the throttle information within the range satisfying Expression (1). When R1 > $\alpha$ is satisfied, the signal processor 2 determines the rotation speed command value ($D_{MA}$) of the first motor 11 by Expression (2). When $R_2 < \beta$ is satisfied, the signal processor 2 determines the rotation speed command value ($D_{MB}$) of the second motor 12 by Expression (3). In the example illustrated in FIG. 20, the signal processor 2 determines the rotation speed command value ($D_{MA}$) of the first motor 11 and the rotation speed command value ($D_{MB}$) of the second motor 12 corresponding to the throttle information within the range satisfying Expression (1).

More specifically, the signal processor 2 determines the rotation speed ($N_{MA}$) of the first motor 11 and the rotation speed ($N_{MB}$) of the second motor 12 such that the rotation speed ($N_{MB}$) of the second motor 12 is the median within the range of Expression (1), for example. The signal processor 2 determines the rotation speed command value ($D_{MA}$) of the first motor 11 and the rotation speed command value ($D_{MB}$) of the second motor 12 such that the rotation speed ($N_{MA}$) of the first motor 11 and the rotation speed ($N_{MB}$) of the second motor 12 that have been determined are obtained. In FIG. 19, from 0 [seconds] until around 5 [seconds], the rotation speed command values of the respective motors corresponding to the throttle information are given to the inverter 3. Around 5 [seconds], a throttle operation is stopped. The stopping of the throttle operation caused an abrupt reduction in acceleration, whereby from that point until the rotation speeds of the respective motors reduce to 0 [rpm], the rotation speed command values of the respective motors do not simply follow the throttle value and are determined based on the rising rate of change ($\alpha$) and the falling rate of change ($\beta$). With this control, an abrupt change in the rotation speed of the wheel H is prevented, and vehicle operability can be improved.

In FIG. 19, from around 2.6 [seconds] until around 5 [seconds], the reason why the rotation speed command value ($D_{MB}$) of the first motor 11 is constant at 2,000 [rpm] is because limitation (a limiter) with 2,000 [rpm] as an upper limit is imposed on the rotation speed command value ($D_{MB}$) of the first motor 11 in advance. Such limitation may be set in advance or is not necessarily set. In the example in FIG. 19, the rising rate of change ($\alpha$) of the first motor 11 = 400. The reason why the rising rate of change ($\alpha$) is a positive value is because it is set as a threshold for a change in the number of rotations in the forward rotation direction. In the example in FIG. 19, the falling rate of change ($\beta$) of the second motor 12 = -256. The reason why the falling rate of change ($\beta$) is a negative value is because it is set as a threshold for a change in the number of rotations in the backward rotation direction. Thus, in the present embodiment, the rising rate of change ($\alpha$) functions as a positive threshold for the acceleration in the forward rotation direction of the first motor 11, whereas the falling rate of change ($\beta$) functions as a negative threshold for the acceleration in the backward rotation direction of the second motor 12.

The ratio between the absolute value of the rising rate of change ($\alpha$) of the first motor 11 and the absolute value of the falling rate of change ($\beta$) of the second motor 12 is 1:0.64, for example. This ratio is a ratio in terms of absolute value. When represented by notation considering that the rising rate of change ($\alpha$) is a positive threshold, whereas the falling rate of change ($\beta$) is a negative threshold, the ratio is 1:-0.64. The ratio corresponds to the ratio between the rotation speed of the first motor 11 and the rotation speed of the second motor 12 determined based on Expression (1), for example. Specifically, the ratio is set in accordance with the reduction ratio ($i_1$) of the first planetary gear mechanism 20 and the reduction ratio ($i_2$) of the second planetary gear mechanism 30 included in Expression (1). At least either the rising rate of change ($\alpha$) of the first motor 11 or the falling rate of change ($\beta$) of the second motor 12 (the rising rate of change ($\alpha$), for example) may be determined by an experiment or the like. A falling rate of change (-5,000, for example) may be set for the first motor 11, whereas a rising rate of change (5,000, for example) may be set for the second motor 12.

In contrast, as in FIG. 20, when the rotation speed command values of the respective motors are caused to simply follow the throttle information, even when a throttle operation is stopped (between 8 [seconds] and 9 [seconds]), the rotation speed command values of the respective motors are determined so as to simply follow the throttle information. Consequently, the actual rotation speeds of the respective motors abruptly reduce compared with the example illustrated in FIG. 19. Under this control, at the instant of stopping the throttle operation, the rotation speed of the wheel H abruptly reduces, and braking as if a brake pedal were pressed to reduce speed is performed even though the brake pedal is not pressed.

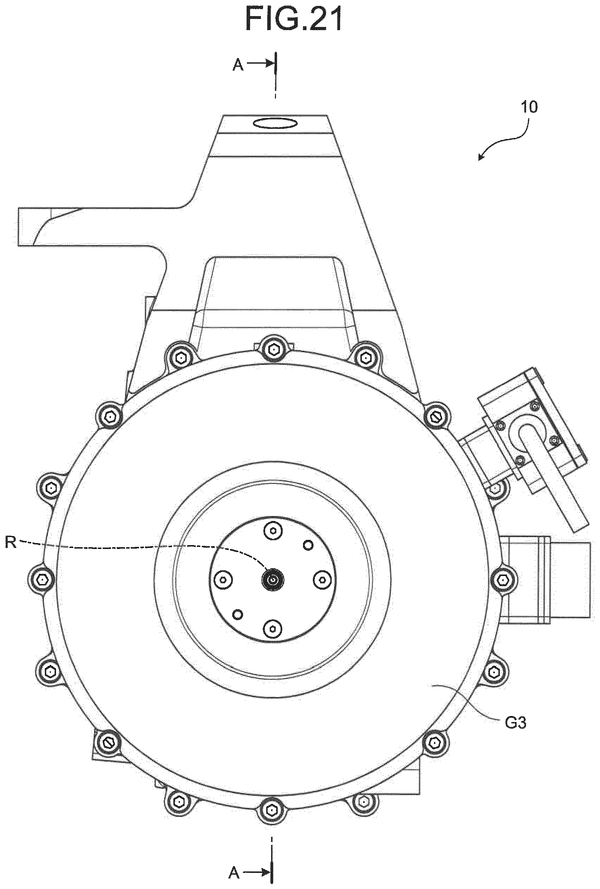

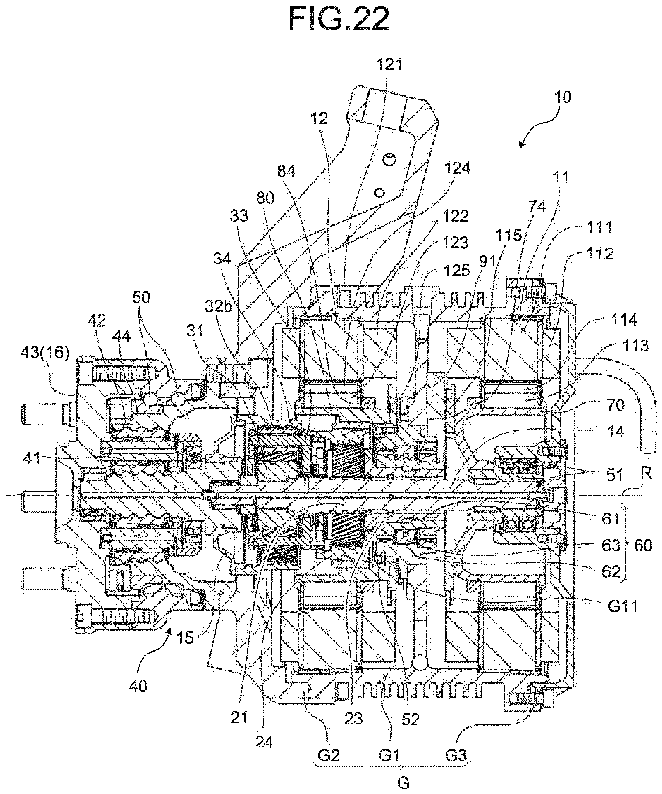

FIG. 21 is an elevational view of the electric vehicle drive apparatus according to the present embodiment. FIG. 22 is an A-A sectional view of FIG. 21. In the following description, for the components described above, a duplicate description is omitted, and they are denoted by the same symbols in the drawings. An axial direction of the first motor 11 (a direction along the rotation shaft R) will be simply denoted as an axial direction. A radial direction of the first motor 11 (a direction orthogonal to the rotation shaft R) will be simply denoted as a radial direction. A circumferential direction of the first motor 11 (a tangential direction of a circle centered at the rotation shaft R) will be simply denoted by a circumferential direction.

As illustrated in FIG. 22, the case G includes a case G1, a case G2, and a case G3. The case G1 is a tubular member and includes an annular partition G11 protruding from its inner wall. The partition G11 separates the first motor 11 and the second motor 12. In other words, the first motor 11 is placed on one side of the partition G11, whereas the second motor 12 is placed on the other side of the partition G11. The case G2 is a tubular member and is provided on the wheel H side of the case G1. The case G1 and the case G2 are fastened to each other with a plurality of bolts, for example. The case G3 is provided on an end face out of the two end faces of the case G1 opposite the case G2, that is, an end face on the electric vehicle's body side of the case G1. The case G1 and the case G3 are fastened to each other with a plurality of bolts, for example. The case G3 blocks an opening on one side of the case G1.

As illustrated in FIG. 22, the first motor 11 includes a first stator core 111, a first coil 112, a first rotor core 113, first magnets 114, a first detected member 115, and a first rotor holding member 70. The first stator core 111 is a tubular member. The first stator core 111 is fit into an inner circumferential face of the case G1. The first coil 112 is provided at a plurality of places of the first stator core 111. The first coil 112 is wound around the first stator core 111 via an insulator.

The first rotor core 113 is placed on the inside in the radial direction. The first rotor core 113 is a tubular member. The first magnets 114 are provided on an outer circumferential face of the first rotor core 113, for example. The first detected member 115 is used to detect a rotation angle of the first rotor core 113. The first detected member 115 is an annular member, for example, and rotates together with the first rotor core 113.

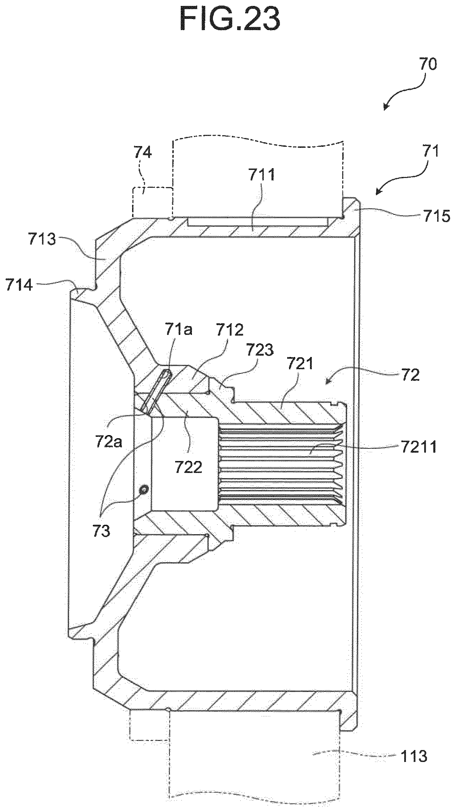

FIG. 23 is a sectional view illustrating the first rotor holding member 70 in FIG. 22 in an enlarged manner. The first rotor holding member 70 is a member supporting the first rotor core 113 to be rotatable about the rotation shaft R. As illustrated in FIG. 22, the first rotor holding member 70 is supported on the case G3 via a bearing 51 and is coupled to the sun gear shaft 14. As illustrated in FIG. 23, the first rotor holding member 70 includes a first outer member 71, a first inner member 72, a first pin 73, and a first positioning ring 74.

The first outer member 71 is a member formed of a first metal. The first metal is an aluminum alloy, for example. A protruding part provided on one of an inner circumferential face of the first rotor core 113 and an outer circumferential face of the first outer member 71 fits into a recessed part provided on the other thereof. In other words, the first rotor core 113 and the first outer member 71 are coupled to each other with what is called a faucet joint. As illustrated in FIG. 23, the first outer member 71 includes an outer tube part 711, an inner tube part 712, a coupling part 713, a rib 714, and a flange 715. The outer tube part 711, the inner tube part 712, the coupling part 713, the rib 714, and the flange 715 are integrally formed. The outer tube part 711 is a tubular member and is in contact with the inner circumferential face of the first rotor core 113. The inner tube part 712 is a tubular member and is in contact with an outer circumferential face of the first inner member 72. The inner tube part 712 is provided with a first recessed part 71a. The first recessed part 71a is a cylindrical recess, for example. The coupling part 713 couples one end of the outer tube part 711 and one end of the inner tube part 712 to each other. Specifically, the coupling part 713 is curved and is closer to the partition G11 than the outer tube part 711 and the inner tube part 712. The rib 714 is an annular member protruding from the coupling part 713 in a direction along the rotation shaft R. The rib 714 is a member for supporting the first detected member 115 illustrated in FIG. 22. The flange 715 is an annular member protruding from the other end of the outer tube part 711 (the end opposite the end connected to the coupling part 713) in the radial direction. The flange 715 is used for the positioning of the first rotor core 113.

The first inner member 72 is a member formed of a second metal. The second metal is a metal having a larger specific gravity than the specific gravity of the first metal described above and is carbon steel, for example. As illustrated in FIG. 23, the first inner member 72 includes a small tube part 721, a large tube part 722, and a flange 723. The small tube part 721, the large tube part 722, and the flange 723 are integrally formed. The small tube part 721 is a tubular member and includes a spline 7211 on its inner circumferential face. The spline 7211 fits into a spline provided at an end of the sun gear shaft 14. The large tube part 722 is a tubular member and is in contact with an inner circumferential face of the inner tube part 712 of the first outer member 71. The large tube part 722 is provided with a first hole 72a. The first hole 72a is a cylindrical through hole having the same diameter as the diameter of the first recessed part 71a of the inner tube part 712, for example, and overlaps with the first recessed part 71a. The flange 723 is an annular member protruding from an outer circumferential face of the large tube part 722 in the radial direction. The flange 723 is used for the positioning of the first outer member 71.

The first pin 73 is a member for transmitting torque easily between the first outer member 71 and the first inner member 72. The first pin 73 is placed at a position covering the first recessed part 71a and the first hole 72a. The first pin 73 is a cylindrical pin having substantially the same diameter as the diameter of the first recessed part 71a and the first hole 72a, for example. The first inner member 72 is fixed to the first outer member 71 by press fit, for example. More specifically, the large tube part 722 is fixed to the inner circumferential face of the inner tube part 712 by shrink fit. With this fixing, a frictional force occurs between the outer circumferential face of the large tube part 722 and the inner circumferential face of the inner tube part 712, and some torque is transmitted between the first outer member 71 and the first inner member 72. However, the inner tube part 712 is an aluminum alloy, and it is difficult to increase the frictional force occurring between the outer circumferential face of the large tube part 722 and the inner circumferential face of the inner tube part 712. Given these circumstances, the first inner member 72 is press fit into the first outer member 71, then the first pin 73 is press fit from the first hole 72a toward the first recessed part 71a. With this press fit, torque is transmitted between the first outer member 71 and the first inner member 72 via the first pin 73. In this process, a shear force occurs in the first pin 73. The first pin 73 is provided, whereby torque is transmitted more easily between the first outer member 71 and the first inner member 72 than a case in which the first outer member 71 and the first inner member 72 are fixed to each other by press fit alone. The first recessed part 71a is positioned on the radial outside of the first hole 72a, whereby the first pin 73 is prevented from falling by a centrifugal force.

The first positioning ring 74 is a member for the positioning of the first rotor core 113. The first rotor core 113 is positioned by being held between the first positioning ring 74 and the flange 715. The first positioning ring 74 is an annular member formed of an aluminum alloy, for example. The first positioning ring 74 is fit over an outer circumferential face of the outer tube part 711 by press fit, for example. The first positioning ring 74 is placed at a position on the rib 714 side of the first rotor core 113. More specifically, the first positioning ring 74 is placed at a position overlapping with the inner tube part 712 and the coupling part 713 in the radial direction. The vicinity of the rib 714 is relatively high in rigidity. The rigidity means geometrical moment of inertia, for example. Consequently, a part of the outer tube part 711 closer to the coupling part 713 is more difficult to become deformed by a force in the radial direction. Consequently, the first positioning ring 74 is placed at the position on the rib 714 side of the first rotor core 113, whereby a press-fit force when the first positioning ring 74 is press fit over the outer tube part 711 is easily increased.

As illustrated in FIG. 22, the second motor 12 includes a second stator core 121, a second coil 122, a second rotor core 123, second magnets 124, a second detected member 125, and a second rotor holding member 80. The second stator core 121 is a tubular member. The second stator core 121 is fit into the inner circumferential face of the case G1. The second coil 122 is provided at a plurality of places of the second stator core 121. The second coil 122 is wound around the second stator core 121 via an insulator.

The second rotor core 123 is placed on the inside of the second stator core 121 in the radial direction. The second rotor core 123 is a tubular member. A plurality of the second magnets 124 are provided on an outer circumferential face of the second rotor core 123, for example. The second detected member 125 is used to detect a rotation angle of the second rotor core 123. The second detected member 125 is an annular member, for example, and rotates together with the second rotor core 123.

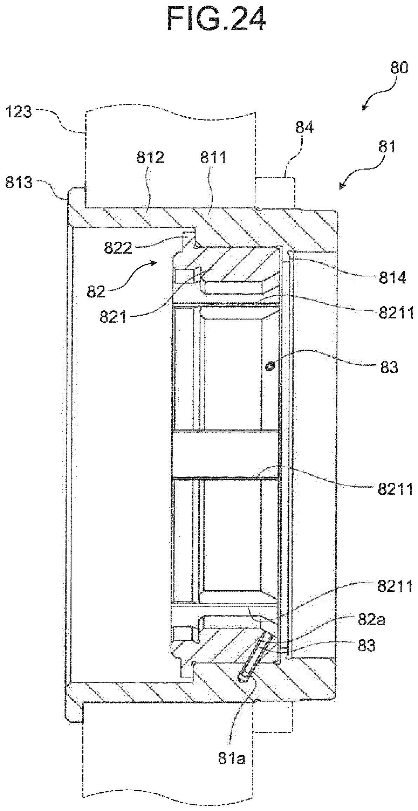

FIG. 24 is a sectional view illustrating the second rotor holding member in FIG. 22 in an enlarged manner. The second rotor holding member 80 is a member supporting the second rotor core 123 to be rotatable about the rotation shaft R. As illustrated in FIG. 22, the second rotor holding member 80 is supported on the clutch apparatus 60 via a bearing 52 and is coupled to the first ring gear 24. As illustrated in FIG. 24, the second rotor holding member 80 includes a second outer member 81, a second inner member 82, a second pin 83, and a second positioning ring 84.

The second outer member 81 is a member formed of a third metal. The third metal is an aluminum alloy, for example. A protruding part provided on one of an inner circumferential face of the second rotor core 123 and an outer circumferential face of the second outer member 81 fits into a recessed part provided on the other thereof. In other words, the second rotor core 123 and the second outer member 81 are coupled to each other with what is called a faucet joint. As illustrated in FIG. 24, the second outer member 81 includes a thick part 811, a thin part 812, a flange 813, and a protrusion 814. The thick part 811, the thin part 812, the flange 813, and the protrusion 814 are integrally formed. The thick part 811 is a tubular member and is in contact with the inner circumferential face of the second rotor core 123 and an outer circumferential face of the second inner member 82. The thick part 811 is provided with a second recessed part 81a. The second recessed part 81a is a cylindrical recess, for example. The thin part 812 is a tubular member and is in contact with the inner circumferential face of the second rotor core 123. The thin part 812 is placed on a side opposite the partition G11 relative to the thick part 811. The thickness of the thin part 812 is smaller than the thickness of the thick part 811. The flange 813 is an annular member protruding from an end of the thin part 812 opposite the thick part 811 in the radial direction. The flange 813 is used for the positioning of the second rotor core 123. The protrusion 814 is an annular member protruding from an inner circumferential face of the thick part 811 in the radial direction. The protrusion 814 is in contact with the bearing 52. The protrusion 814 is used for the positioning of the bearing 52.

The second inner member 82 is a member formed of a fourth metal. The fourth metal is a metal having a larger specific gravity than the specific gravity of the third metal described above and is carbon steel, for example. As illustrated in FIG. 24, the second inner member 82 includes a fitting part 821 and a flange 822. The fitting part 821 and the flange 822 are integrally formed. The fitting part 821 is a tubular member and includes a plurality of recessed parts 8211 on its inner circumferential face. The recessed parts 8211 fit into protruding parts provided on an outer circumferential face of the first ring gear 24. The fitting part 821 is provided with a second hole 82a. The second hole 82a is a cylindrical through hole having the same diameter as the diameter of the second recessed part 81a of the thick part 811, for example, and overlaps with the second recessed part 81a. The flange 822 is an annular member protruding from an outer circumferential face of the fitting part 821 in the radial direction. The flange 822 is in contact with a step between the thick part 811 and the thin part 812. The flange 822 is used for the positioning of the second inner member 82.

The second pin 83 is a member for transmitting torque easily between the second outer member 81 and the second inner member 82. The second pin 83 is placed at a position covering the second recessed part 81a and the second hole 82a. The second pin 83 is a cylindrical pin having substantially the same diameter as the diameter of the second recessed part 81a and the second hole 82a, for example. The second inner member 82 is fixed to the second outer member 81 by press fit, for example. More specifically, the fitting part 821 is fixed to the inner circumferential face of the thick part 811 by shrink fit. With this fixing, a frictional force occurs between the outer circumferential face of the fitting part 821 and the inner circumferential face of the thick part 811, and some torque is transmitted between the second outer member 81 and the second inner member 82. However, the thick part 811 is an aluminum alloy, and it is difficult to increase the frictional force occurring between the outer circumferential face of the fitting part 821 and the inner circumferential face of the thick part 811. Given these circumstances, the second outer member 81 and the second inner member 82 are fixed to each other, then the second pin 83 is press fit from the second hole 82a toward the second recessed part 81a. With this press fit, torque is transmitted between the second outer member 81 and the second inner member 82 via the second pin 83. In this process, a shear force occurs in the second pin 83. The second pin 83 is provided, whereby torque is transmitted more easily between the second outer member 81 and the second inner member 82 than a case in which the second outer member 81 and the second inner member 82 are fixed to each other by press fit alone. The second recessed part 81a is positioned on the radial outside of the second hole 82a, whereby the second pin 83 is prevented from falling by a centrifugal force.

The second positioning ring 84 is a member for the positioning of the second rotor core 123. The second rotor core 123 is positioned by being held between the second positioning ring 84 and the flange 813. The second positioning ring 84 is an annular member formed of an aluminum alloy, for example. The second positioning ring 84 is fit over an outer circumferential face of the thick part 811 by press fit, for example. More specifically, the second positioning ring 84 is placed at a position overlapping with the fitting part 821 in the radial direction. A part of the thick part 811 overlapping with the fitting part 821 in the radial direction is more difficult to become deformed by a force in the radial direction than a part not overlapping with the fitting part 821. Consequently, the second positioning ring 84 is placed at the position overlapping with the fitting part 821 in the radial direction, whereby a press-fit force when the second positioning ring 84 is press fit over the thick part 811 is easily increased.

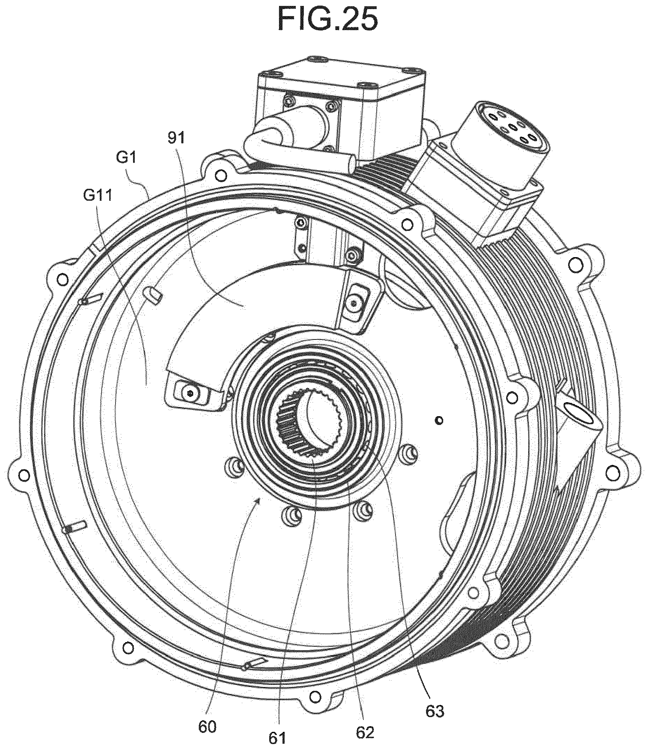

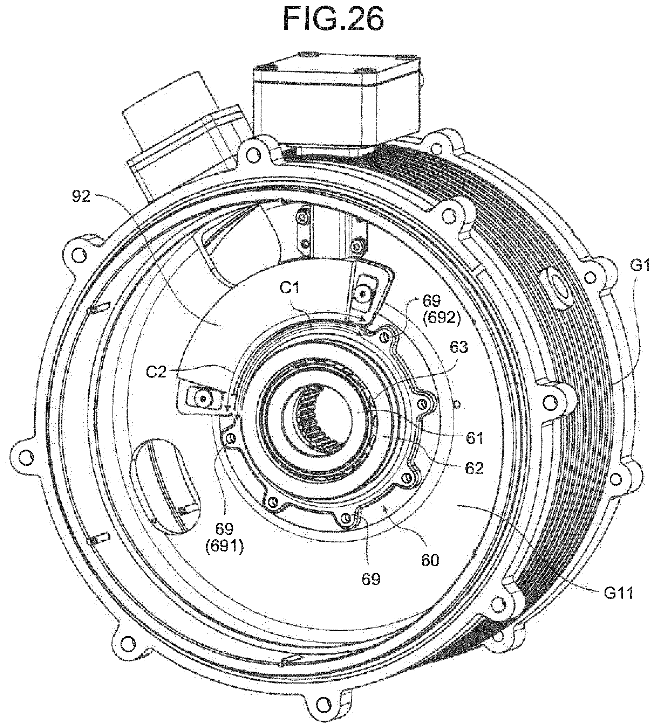

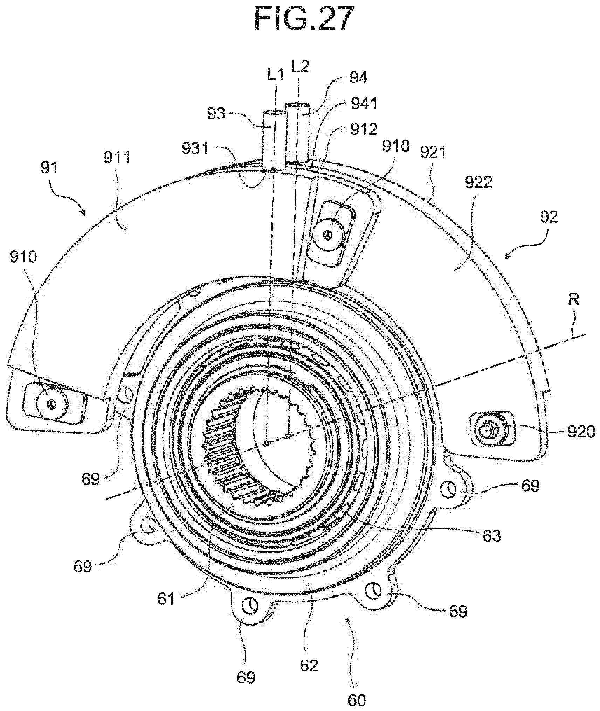

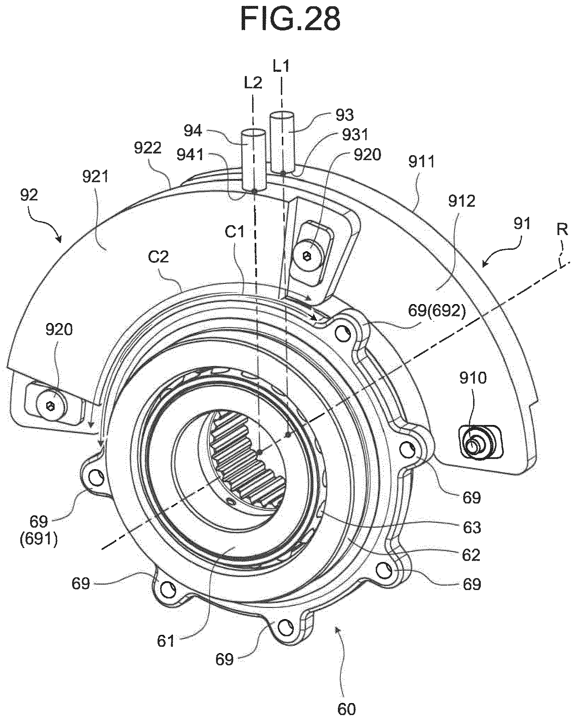

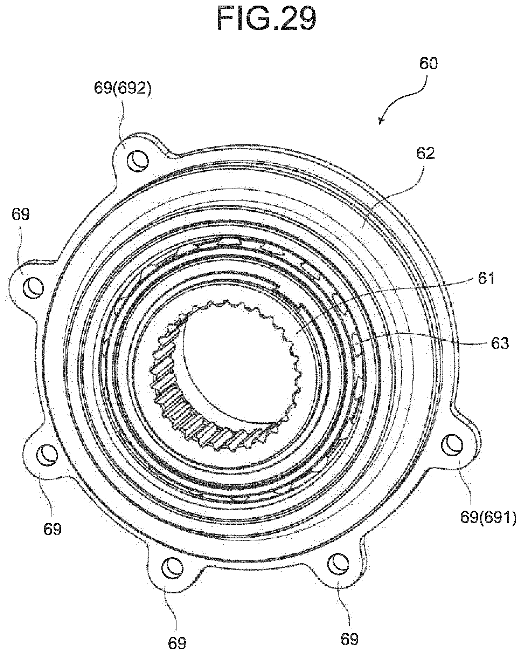

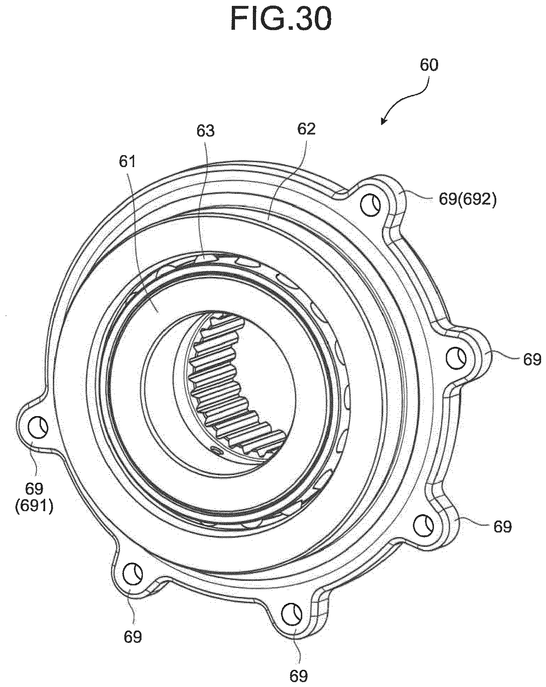

FIG. 25 is a perspective view viewing a partition, a clutch apparatus, and a first rotation angle detector from the first motor side. FIG. 26 is a perspective view viewing the partition, the clutch apparatus, and a second rotation angle detector from the second motor side. FIG. 27 is a perspective view viewing the clutch apparatus and the first rotation angle detector from the first motor side. FIG. 28 is a perspective view viewing the clutch apparatus and the second rotation angle detector from the second motor side. FIG. 29 is a perspective view viewing the clutch apparatus from the first motor side. FIG. 30 is a perspective view viewing the clutch apparatus from the second motor side.

As illustrated in FIG. 25 and FIG. 26, the clutch apparatus 60 is fixed to the partition G11. As illustrated in FIG. 25 to FIG. 30, the clutch apparatus 60 is what is called a cam type clutch apparatus and includes an inner ring 61, an outer ring 62, and a roller 63. The inner ring 61 is coupled to the first carrier 23. Specifically, an inner circumferential face of the inner ring 61 is provided with a spline, and this spline is fit into a spline provided on an outer circumferential face of the first carrier 23. The outer ring 62 is coupled to the partition G11. The roller 63 is placed between the inner ring 61 and the outer ring 62. The roller 63 is supported on the inner ring 61 and rotates together with the inner ring 61. When the inner ring 61 rotates in the first direction, the roller 63 meshes with the outer ring 62. Consequently, the inner ring 61 becomes unable to rotate, and the first carrier 23 becomes also unable to rotate. In contrast, when the inner ring 61 rotates in the second direction, the roller 63 does not mesh with the outer ring 62. Consequently, the inner ring 61 can rotate, and thus the first carrier 23 can also rotate.

More specifically, the outer ring 62 is provided with a plurality of collars 69. The collars 69 protrude from the outer ring 62 in the radial direction and face the partition G11. The collars 69 are arranged in the circumferential direction, for example. The collars 69 are fastened to the partition G11 with bolts or the like. As illustrated in FIG. 26 and FIG. 28, a distance C1 from a collar 69 at one end in the circumferential direction to a collar 69 at another end is larger than the spacing between the other collars 69. In other words, the collars 69 are arranged unevenly in a part in the circumferential direction. With this arrangement, the clutch apparatus 60 is reduced in weight compared with a case in which the collars 69 are arranged at regular intervals across the entire circumference of the outer ring 62.

As illustrated in FIG. 25 and FIG. 26, the first rotation angle detector 91 and the second rotation angle detector 92 are fixed to the partition G11. With this fixing, the length of the case G in the axial direction is smaller than a case in which the vicinity of the partition G11 is dead space. The first rotation angle detector 91 faces the first detected member 115 illustrated in FIG. 22. The first rotation angle detector 91 detects magnetic flux of the first detected member 115 and can thereby calculate an absolute angle (an absolute electrical angle in one pole pair) of the first rotor core 113. The second rotation angle detector 92 faces the second detected member 125 illustrated in FIG. 22. The second rotation angle detector 92 detects magnetic flux of the second detected member 125 and can thereby calculate an absolute angle of the second rotor core 123. The controller 1 illustrated in FIG. 1 controls currents to be passed through the first coil 112 and the second coil 122 based on the absolute angle of the first rotor core 113 detected by the first rotation angle detector 91 and the absolute angle of the second rotor core 123 detected by the second rotation angle detector 92.

As illustrated in FIG. 25, FIG. 27, and FIG. 28, the first rotation angle detector 91 has a belt-like shape along the circumferential direction. Viewing from the axial direction, an outer circumferential face of the first rotation angle detector 91 is formed in a fan-shaped arc shape with a central angle of about 90 degrees, for example. As illustrated in FIG. 27 and FIG. 28, the first rotation angle detector 91 is fixed to the partition G11 with fastening members 910 provided at both ends in the circumferential direction. A first face 911 (a front face) of the first rotation angle detector 91 faces the first detected member 115, whereas a second face 912(a back face) of the first rotation angle detector 91 faces the partition G11.

As illustrated in FIG. 27 and FIG. 28, a first signal line 93 for outputting electric signals is connected to the first rotation angle detector 91. One end of the first signal line 93 is connected to the outer circumferential face of the first rotation angle detector 91, whereas the other end of the first signal line 93 is placed outside the case G. The first signal line 93 is connected to one end in the circumferential direction on the outer circumferential face of the first rotation angle detector 91, for example. More specifically, viewing from the first face 911 side, the connection position of the first signal line 93 relative to the first rotation angle detector 91 deviates clockwise from the center in the circumferential direction of the outer circumferential face of the first rotation angle detector 91.

As illustrated in FIG. 26 to FIG. 28, the second rotation angle detector 92 has a belt-like shape along the circumferential direction similarly to the first rotation angle detector 91. As illustrated in FIG. 27 and FIG. 28, the second rotation angle detector 92 is fixed to the partition G11 with fastening members 920 provided at both ends in the circumferential direction. A first face 921 (a front face) of the second rotation angle detector 92 faces the second detected member 125, whereas a second face 922 (a back face) of the second rotation angle detector 92 faces the partition G11. As illustrated in FIG. 26, the second rotation angle detector 92 is placed to be along the outer ring 62 of the clutch apparatus 60. As illustrated in FIG. 26 and FIG. 28, a length C2 of an inner circumferential face of the second rotation angle detector 92 in the circumferential direction is smaller than the distance C1 from a collar 691 to a collar 692. With this relation, the second rotation angle detector 92 is placed between the collar 691 and the collar 692. Consequently, the second rotation angle detector 92 is easily positioned on the inside in the radial direction. Consequently, the second rotation angle detector 92 is easily reduced in size.

As illustrated in FIG. 27 and FIG. 28, a second signal line 94 for outputting electric signals is connected to the second rotation angle detector 92. One end of the second signal line 94 is connected to an outer circumferential face of the second rotation angle detector 92, whereas the other end of the second signal line 94 is placed outside the case G. The second signal line 94 is connected to one end in the circumferential direction on the outer circumferential face of the second rotation angle detector 92, for example. More specifically, viewing from the first face 921 side, the connection position of the second signal line 94 relative to the second rotation angle detector 92 deviates clockwise from the center in the circumferential direction of the outer circumferential face of the second rotation angle detector 92. Viewing in the axial direction, a first straight line L1 passing through a base 931 on the first rotation angle detector 91 side of the first signal line 93 and the rotation shaft R overlaps with a second straight line L2 passing through a base 941 on the second rotation angle detector 92 side of the second signal line 94 and the rotation shaft R.

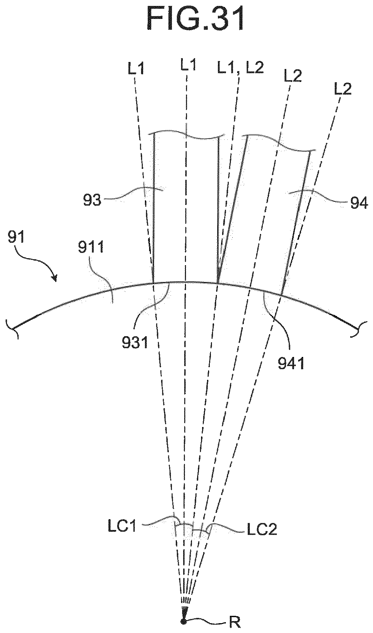

However, the first straight line L1 passing through the center of the base 931 does not necessarily overlap with the second straight line L2 passing through the center of the base 941 as illustrated in FIG. 27 and FIG. 28. FIG. 31 is a schematic diagram of an example of the position of a second signal line relative to the position of a first signal line. As illustrated in FIG. 31, viewing in the axial direction, the first straight line L1 passing through an end of the base 931 may overlap with the second straight line L2 passing through an end of the base 941. In other words, viewing in the axial direction, an angle range LC1 of the first straight line L1 and an angle range LC2 of the second straight line L2 centered on the rotation shaft R may be in contact with each other or overlap with each other such that one of a plurality of first straight lines L1 overlaps with at least one of a plurality of second straight lines L2.

The first rotation angle detector 91 and the second rotation angle detector 92 are placed as described above, and the second rotation angle detector 92 deviates from the first rotation angle detector 91 in the circumferential direction. In other words, viewing in the axial direction, a part of the second rotation angle detector 92 overlaps with the first rotation angle detector 91, and the other part of the second rotation angle detector 92 does not overlap with the first rotation angle detector 91. Consequently, the fastening members 920 deviate from the fastening members 910 in the circumferential direction, and the fastening members 920 and the fastening members 910 are prevented from interfering with each other.

The first metal and the third metal are not necessarily an aluminum alloy and may be another metal such as a magnesium alloy. The first metal and the third metal may be different metals. The second metal and the fourth metal are not necessarily carbon steel and may be another metal such as alloy steel. The second metal and the fourth metal may be different metals.

The shape of the first recessed part 71a, the first hole 72a, the second recessed part 81a, and the second hole 82a is not necessarily cylindrical and may be prismatic for example. The first pin 73 is not necessarily cylindrical and may be any shape fitting into the first recessed part 71a and the first hole 72a. The second pin 83 is not necessarily cylindrical and may be any shape fitting into the second recessed part 81a and the second hole 82a.

The second rotation angle detector 92 is not necessarily placed between the collar 691 and the collar 692, and the first rotation angle detector 91 may be placed between the collar 691 and the collar 692. In this case, the collars 69 face a surface of the partition G11 on the first motor 11 side. Both the first rotation angle detector 91 and the second rotation angle detector 92 are not necessarily placed between the collar 691 and the collar 692. In this case, the collars 69 facing the surface of the partition G11 on the first motor 11 side and the collars 69 facing a surface of the partition G11 on the second motor 12 side may be provided.

As described above, in the present embodiment, in the electric vehicle drive apparatus 10 provided on the supposition of rotation in the forward rotation direction, in which the one-way clutch does not perform braking, the second ring gear 34 can be rotated in the backward rotation direction, in which the one-way clutch performs braking. Consequently, the electric vehicle drive apparatus 10 that also enables backward traveling even when any of the forward rotation direction and the backward rotation direction is the forward traveling direction can be provided.

Calculation of the rotation drive command values of the respective motors by Expression (2) and Expression (3) is performed, whereby even when an abrupt reduction in acceleration occurs during backward traveling, an abrupt reduction in the rotation speed of the output shaft can be prevented. Consequently, abrupt braking during backward traveling can be prevented, and vehicle operability can be improved.

The controller 1 determines the rotation speed ($N_{MA}$) of the first motor 11 and the rotation speed ($N_{MB}$) of the second motor 12 such that the rotation speed ($N_{MB}$) of the second motor 12 is the median within the range of Expression (1), whereby deviation from the relation between the rotation speed ($N_{MA}$) of the first motor 11 and the rotation speed ($N_{MB}$) of the second motor 12 that enables backward traveling can be prevented more surely.

The reduction ratio ($i_1$) of the first planetary gear mechanism 20 is determined by the number of teeth ($Z_{S1}$) of the first sun gear 21 and the number of teeth ($Z_{R1}$) of the first ring gear 24, whereas the reduction ratio ($i_2$) of the second planetary gear mechanism 30 is determined by the number of teeth ($Z_{S2}$) of the second sun gear 31 and the number of teeth ($Z_{R2}$) of the second ring gear 34, and these numbers of teeth are set to any number, whereby the relation between the rotation speed ($N_{MA}$) of the first motor 11 and the rotation speed ($N_{MB}$) of the second motor 12 indicated by Expression (1) can be set to any relation.

When the rotation direction of the wheel H and the rotation direction of the first motor 11 are the same as in the present embodiment, the relation between the rotation speed ($N_{MA}$) of the first motor 11 and the rotation speed ($N_{MB}$) of the second motor 12 is set to Expression (1), whereby backward traveling is enabled.

In the electric vehicle drive apparatus 10 that enables backward traveling by setting the relation between the rotation speed ($N_{MA}$) of the first motor 11 and the rotation speed ($N_{MB}$) of the second motor 12 to Expression (1), in forward traveling, the rotation directions of the first motor 11 and the second motor 12 and based on which of torque and rotation speed control of the second motor 12 is performed are determined, whereby shock during speed changing during forward traveling can be reduced.

In the first state, the first motor 11 and the second motor 12 are subjected to the torque control, the rotation direction of the first motor 11 is set to the forward rotation direction, and the rotation direction of the second motor 12 is set to the backward rotation direction, whereby higher torque than that of the second state can be output. In the second state, the first motor 11 is subjected to the torque control, whereas the second motor 12 is subjected to the rotation speed control in accordance with the rotation speed of the first motor 11, whereby without requiring to design any complicated control system for causing the operation of the second motor 12 to operate in a linked manner with the first motor 11, the operation of the second motor 12 can be operated in a linked manner in accordance with the rotation direction and the rotation speed of the first motor 11. In the second state, a higher rotation speed than that in the first state can be output. The first state and the second state can be switched freely with any timing while reducing what is called shock during speed changing in which switching between the first state and the second state is performed.

Further, the electric vehicle drive apparatus 10 includes the first motor 11, the second motor 12, and the speed change mechanism 13 that is coupled to the first motor 11 and the second motor 12 and can switch the reduction ratio. The speed change mechanism 13 includes the sun gear shaft 14 coupled to the first motor 11, the first sun gear 21 rotating together with the sun gear shaft 14, the first pinion gear 22 meshing with the first sun gear 21, and the first ring gear 24 that meshes with the first pinion gear 22 and is coupled to the second motor 12. The first motor 11 includes the first stator core 111, the first rotor core 113 placed on the inside of the first stator core 111 in the radial direction, and the first rotor holding member 70 coupling the first rotor core 113 and the sun gear shaft 14 to each other. The first rotor holding member 70 includes the first outer member 71 being in contact with the first rotor core 113 and the first inner member 72 being in contact with the sun gear shaft 14. The material of the first outer member 71 is the first metal, whereas the material of the first inner member 72 is the second metal having a larger specific gravity than the specific gravity of the first metal.

With this configuration, the material of the first inner member 72 being in contact with the sun gear shaft 14 is the second metal having a relatively large specific gravity, and the abrasion of the first inner member 72 is reduced. In contrast, the material of the first outer member 71, which is likely to be larger in volume than the first inner member 72, is the first metal having a relatively small specific gravity, and an increase in the weight of the first rotor holding member 70 is reduced. Consequently, the electric vehicle drive apparatus 10 is reduced in weight. Consequently, the electric vehicle drive apparatus 10 can include the speed change mechanism 13 and reduce the unsprung weight of the electric vehicle.

Further, in the electric vehicle drive apparatus 10, the first rotor holding member 70 includes the first pin 73 placed at the position covering the first recessed part 71a provided in the first outer member 71 and the first hole 72a that is provided in the first inner member 72 and overlaps with the first recessed part 71a.

With this configuration, torque is transmitted more easily between the first outer member 71 and the first inner member 72 than a case in which the first outer member 71 and the first inner member 72 are fixed to each other by press fit alone. The first recessed part 71a is positioned on the radial outside of the first hole 72a, whereby the first pin 73 is prevented from falling by a centrifugal force.

Further, in the electric vehicle drive apparatus 10, the first outer member 71 includes the outer tube part 711 being in contact with the first rotor core 113, the inner tube part 712 being in contact with the first inner member 72, the coupling part 713 coupling the outer tube part 711 and the inner tube part 712 to each other, and the rib 714 protruding from the coupling part 713 in the axial direction. The first rotor holding member 70 includes the first positioning ring 74 that is fit over the outer circumferential face of the outer tube part 711 at the position on the rib 714 side of the first rotor core 113 and is in contact with the first rotor core 113.

With this configuration, the first rotor core 113 is positioned by the first positioning ring 74. In the outer tube part 711, the vicinity of the rib 714 is relatively high in rigidity. Consequently, the first positioning ring 74 is placed at the position on the rib 714 side of the first rotor core 113, whereby a press-fit force when the first positioning ring 74 is press fit over the outer tube part 711 is easily increased. Consequently, the first positioning ring 74 is prevented from falling.

Further, in the electric vehicle drive apparatus 10, the second motor 12 includes the second stator core 121, the second rotor core 123 placed on the inside of the second stator core 121 in the radial direction, and the second rotor holding member 80 that couples the second rotor core 123 and the first ring gear 24 to each other. The second rotor holding member 80 includes the second outer member 81 being in contact with the second rotor core 123 and the second inner member 82 being in contact with the first ring gear 24. The material of the second outer member 81 is the third material, whereas the material of the second inner member 82 is the fourth material having a larger specific gravity than the specific gravity of the third metal.

With this configuration, the material of the second inner member 82 being in contact with the first ring gear 24 is the fourth material having a relatively large specific gravity, and the abrasion of the second inner member 82 is reduced. In contrast, the material of the second outer member 81, which is likely to be larger in volume than the second inner member 82, is the third metal having a relatively small specific gravity, and an increase in the weight of the second rotor holding member 80 is reduced. Consequently, the electric vehicle drive apparatus 10 is reduced in weight. Consequently, the electric vehicle drive apparatus 10 can include the speed change mechanism 13 and reduce the unsprung weight of the electric vehicle.

Further, in the electric vehicle drive apparatus 10, the second rotor holding member 80 includes the second pin 83 placed at the position covering the second recessed part 81a provided in the second outer member 81 and the second hole 82a that is provided in the second inner member 82 and overlaps with the second recessed part 81a.

With this configuration, torque is transmitted more easily between the second outer member 81 and the second inner member 82 than a case in which the second outer member 81 and the second inner member 82 are fixed to each other by press fit alone. The second recessed part 81a is positioned on the radial outside of the second hole 82a, whereby the second pin 83 is prevented from falling by a centrifugal force.

Further, in the electric vehicle drive apparatus 10, the second rotor holding member 80 includes the second positioning ring 84 that is fit over the outer circumferential face of the second outer member 81 at the position overlapping with the second inner member 82 in the radial direction of the second motor 12 and is in contact with the second rotor core 123.

With this configuration, the second rotor core 123 is positioned by the second positioning ring 84. In the second outer member 81, a part overlapping with the second inner member 82 in the radial direction is relatively high in rigidity. Consequently, the second positioning ring 84 is placed at the position overlapping with the second inner member 82 in the radial direction, whereby a press-fit force when the second positioning ring 84 is press fit over the second outer member 81 is easily increased. Consequently, the second positioning ring 84 is prevented from falling.

Further, the electric vehicle drive apparatus 10 includes the case G1, the first motor 11, the first rotation angle detector 91, the first signal line 93, the second motor 12, the second rotation angle detector 92, the second signal line 94, and the speed change mechanism 13. The case G1 is a tubular member including the partition G11 thereinside. The first motor 11 includes the first rotor core 113 that can rotate about the rotation shaft R and the first detected member 115 rotating together with the first rotor core 113. The first rotation angle detector 91 is coupled to the partition G11 and faces the first detected member 115. The first signal line 93 is connected to the first rotation angle detector 91. The second motor 12 includes the second rotor core 123 that can rotate about the rotation shaft R and the second detected member 125 rotating together with the second rotor core 123 and is placed on the opposite side of the partition G11 from the first motor 11. The second rotation angle detector 92 is coupled to the partition G11 and faces the second detected member 125. The second signal line 94 is connected to the second rotation angle detector 92. The speed change mechanism 13 is coupled to the first motor 11 and the second motor 12 and can switch the reduction ratio. Viewing in the axial direction, the first straight line L1 passing through the base 931 on the first rotation angle detector 91 side of the first signal line 93 and the rotation shaft R overlaps with the second straight line L2 passing through the base 941 on the second rotation angle detector 92 side of the second signal line 94 and the rotation shaft R.

With this configuration, the first rotation angle detector 91 can be fixed to one side of the partition G11, whereas the second rotation angle detector 92 is fixed to the other side of the partition G11, and the distance from the first rotation angle detector 91 to the second rotation angle detector 92 is likely to be short. On top of that, the first signal line 93 and the second signal line 94 are taken out in the same direction, and the length of the first signal line 93 and the second signal line 94 is likely to be short. Consequently, noise occurring in the output of the first signal line 93 and the second signal line 94 is reduced. Consequently, the electric vehicle drive apparatus 10 can reduce noise occurring in the output of the rotation angle detectors while including the speed change mechanism 13.

Further, in the electric vehicle drive apparatus 10, the position of the second rotation angle detector 92 deviates from the position of the first rotation angle detector 91 in the circumferential direction.

With this configuration, even when the first rotation angle detector 91 and the second rotation angle detector 92 are the same apparatus, the position of the fastening members 920 fixing the second rotation angle detector 92 to the partition G11 deviates from the position of the fastening members 910 fixing the first rotation angle detector 91 to the partition G11. Consequently, fixing of the first rotation angle detector 91 and the second rotation angle detector 92 to the partition G11 is easy. The same apparatus can be used for the first rotation angle detector 91 and the second rotation angle detector 92, and costs for mass production are be reduced.

Further, in the electric vehicle drive apparatus 10, the speed change mechanism 13 includes the sun gear shaft 14 coupled to the first motor 11, the first sun gear 21 rotating together with the sun gear shaft 14, the first pinion gear 22 meshing with the first sun gear 21, the first carrier 23 holding the first pinion gear 22 such that the first pinion gear 22 can rotate on its axis and that the first pinion gear 22 can revolve about the first sun gear 21, and the clutch apparatus 60 that limits the rotation of the first carrier 23. The clutch apparatus 60 includes the inner ring 61 coupled to the first carrier 23, the outer ring 62 coupled to the partition G11, and the collars 69 that protrude from the outer ring 62 in the radial direction and face the partition G11. The collars 69 are arranged unevenly in a part in the circumferential direction. At least either the first rotation angle detector 91 or the second rotation angle detector 92 is placed between the collar 691 at one end in the circumferential direction and the collar 692 at another end.

With this configuration, the outer ring 62 is fixed to the partition G11 with the collars 69. Further, the position of at least either the first rotation angle detector 91 or the second rotation angle detector 92 is likely to be on the inside in the radial direction compared with a case in which the collars 69 are arranged at regular intervals across the entire circumference in the circumferential direction. With this positioning, at least either the first rotation angle detector 91 or the second rotation angle detector 92 is reduced in size. Consequently, the electric vehicle drive apparatus 10 is reduced in weight.

(Modification)

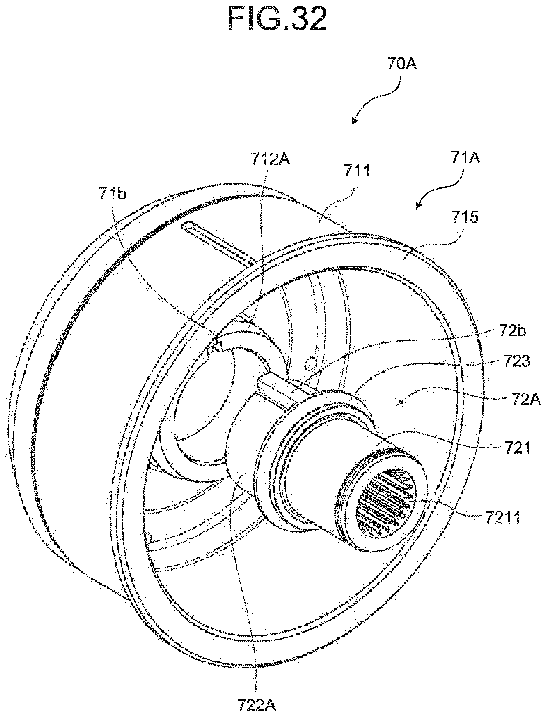

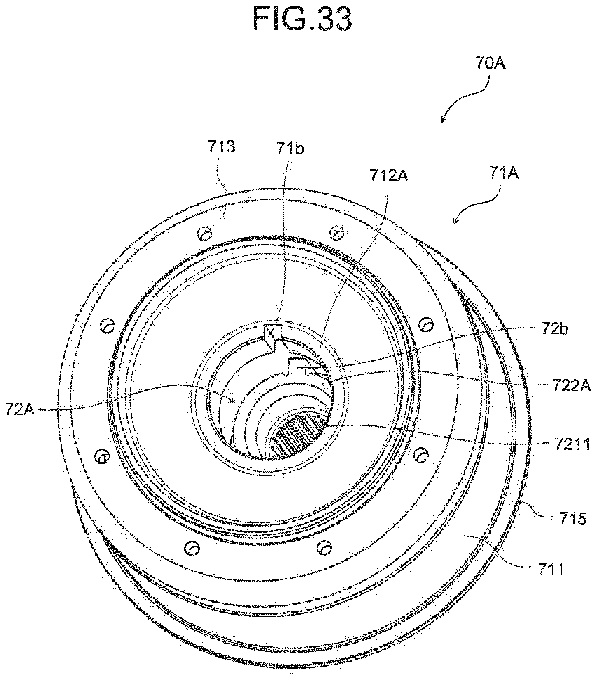

FIG. 32 is a perspective view viewing a first rotor holding member according to a modification from one side. FIG. 33 is a perspective view viewing the first rotor holding member according to the modification from the other side. As illustrated in FIG. 32, the electric vehicle drive apparatus 10 according to the modification includes a first rotor holding member 70A different from the first rotor holding member 70 described above. As illustrated in FIG. 32 and FIG. 33, the first rotor holding member 70A includes a first outer member 71A and a first inner member 72A. The same components as those described in the embodiment are denoted by the same symbols, and a duplicate description is omitted.

The first outer member 71A is a member formed of the first metal. As illustrated in FIG. 32 and FIG. 33, the first outer member 71A includes an inner tube part 712A. The inner tube part 712A is a tubular member and is in contact with an outer circumferential face of the first inner member 72A. The inner tube part 712A is provided with a first recessed part 71b. The first recessed part 71b is a rectangular recess along the axial direction, for example.

The first inner member 72A is a member formed of the second metal. As illustrate in FIG. 32 and FIG. 33, the first inner member 72A includes a large tube part 722A. The large tube part 722A is a tubular member and is in contact with an inner circumferential face of the inner tube part 712A. The large tube part 722A is provided with a first protruding part 72b. The first protruding part 72b is a rectangular protrusion along the axial direction, for example.

The first recessed part 71b and the first protruding part 72b are members for transmitting torque easily between the first outer member 71A and the first inner member 72A. The first protruding part 72b fits into the first recessed part 71b. With this fitting, torque is transmitted between the first outer member 71A and the first inner member 72A via the first recessed part 71b and the first protruding part 72b. In this process, a shear force occurs in the first recessed part 71b and the first protruding part 72b. The first recessed part 71b and the first protruding part 72b are provided, whereby torque is transmitted more easily between the first outer member 71A and the first inner member 72A compared with a case in which the first outer member 71A and the first inner member 72A are fixed to each other by press fit alone.

The structure having the first recessed part 71b and the first protruding part 72b may be applied to the second rotor holding member 80. In other words, the second outer member 81 of the second rotor holding member 80 may include a second recessed part corresponding to the first recessed part 71b, whereas the second inner member 82 may include a second protruding part corresponding to the first protruding part 72b.

In the embodiment and the modification (hereinafter, the embodiment and the like), the condition of switching the operation mode is not limited to an artificial operation via the operating system OP. The signal processor 2 may automatically switch between the first state and the second state by a certain algorithm based on signals such as the rotation speed signals of the first motor 11 and the second motor 12, for example. Although in the description of the embodiment and the like "1" of the shift lever SL and the first state are associated with each other, the correspondence relation between the stage of speed change in the operating system OP such as the shift lever SL and a switching condition between the first state and the second state is not limited to this example and may be any relation.

Although in the embodiment feedback control based on the detection result of the rotation speeds of the first motor 11 and the second motor 12 using the first rotation angle detector 91 and the second rotation angle detector 92 is performed regardless of the operation mode, feedback control is not essential in backward traveling and the first state. Feedback control in the second state may be performed at least for the detection of the rotation speed of the first motor 11, and feedback control for the second motor 12 is not essential.

Reference Signs List

| | |
|---|---|
| 1 | Controller |
| 2 | Signal processor |
| 3 | Inverter |
| 10 | Electric vehicle drive apparatus |
| 11 | First motor |
| 12 | Second motor |
| 13 | Speed change mechanism |
| 14 | Sun gear shaft |
| 15 | Speed change mechanism input/output shaft |
| 16 | Wheel input/output shaft |
| 20 | First planetary gear mechanism |
| 21 | First sun gear |
| 22 | First pinion gear |
| 23 | First carrier |
| 24 | First ring gear |
| 30 | Second planetary gear mechanism |
| 31 | Second sun gear |
| 32a | Second pinion gear |
| 32b | Third pinion gear |
| 33 | Second carrier |
| 34 | Second ring gear |
| 40 | Reduction mechanism |
| 41 | Third sun gear |
| 42 | Fourth pinion gear |
| 43 | Third carrier |
| 44 | Third ring gear |
| 60 | Clutch apparatus |
| 61 | Inner ring |
| 62 | Outer ring |
| 63 | Roller |
| 69, 691, 692 | Collar |
| 70, 70A | First rotor holding member |
| 71, 71A | First outer member |
| 72, 72A | First inner member |

| 73 | First pin |
| 74 | First positioning ring |
| 80 | Second rotor holding member |
| 81 | Second outer member |
| 82 | Second inner member |
| 83 | Second pin |
| 84 | Second positioning ring |
| 91 | First rotation angle detector |
| 92 | Second rotation angle detector |
| 93 | First signal line |
| 94 | Second signal line |
| G, G1, G2, G3 | Case |
| G11 | Partition |
| H | Wheel |
| SI | Drive signal |

**Claims**

1. An electric vehicle drive apparatus comprising:

    a first motor;
    a second motor;
    a speed change mechanism coupled to the first motor and the second motor; and
    a controller controlling operation of the first motor and the second motor,
    the speed change mechanism including:

        a sun gear shaft coupled to the first motor;
        a first planetary gear mechanism having a first sun gear rotating together with the sun gear shaft, a first pinion gear meshing with the first sun gear, a first ring gear that meshes with the first pinion gear and is coupled to the second motor, and a first carrier that is provided rotatably about the sun gear shaft and supports the first pinion gear;
        a second planetary gear mechanism having a second sun gear rotating together with the sun gear shaft, a second pinion gear meshing with the second sun gear, a third pinion gear meshing with the second pinion gear, a second ring gear that meshes with the third pinion gear and is coupled to an output shaft, and a second carrier that supports the second pinion gear and the third pinion gear and is coupled to the first ring gear to rotate about the sun gear shaft; and
        a one-way clutch limiting a rotation direction of the first carrier to a certain forward rotation direction, and

    the controller, when rotating the first motor in a backward rotation direction opposite to the forward rotation direction and rotating the second motor in the forward rotation direction, where a rotation speed of the first motor is $N_{MA}$, a rotation speed of the second motor is $N_{MB}$, a reduction ratio of the first planetary gear mechanism is $i_1$, and a reduction ratio of the second planetary gear mechanism is $i_2$, determining $N_{MB}$ within a range indicated by Expression (1):

$$-\frac{1}{i_1} \times N_{MA} \leq N_{MB} < \left(\frac{1}{1-i_2}\right) \times N_{MA} \qquad (1)$$

2. The electric vehicle drive apparatus according to claim 1, wherein where a positive threshold for acceleration in the forward rotation direction of the first motor is $\alpha$, a negative threshold for acceleration in the backward rotation direction of the second motor is $\beta$, a change in a rotation speed of the first motor per a certain unit time is $R_1$, a change in a rotation speed of the second motor per the certain unit time is $R_2$, a rotation speed command value for the first motor for obtaining $N_{MA}$ is $D_{MA}$, a rotation speed command value for the second motor for obtaining $N_{MB}$ is $D_{MB}$, a rotation speed command value for the first motor before a lapse of the certain unit time is $X_{i-1}$, and a rotation speed command value for the second motor before a lapse of the certain unit time is $Y_{i-1}$, when the first motor is rotating in the backward rotation direction and the second motor is rotating in the forward rotation direction, the controller calculates $D_{MA}$ by Expression (2) when $R_1 > \alpha$ holds true and calculates $D_{MB}$ by Expression (3) when $R_2 < \beta$ holds true:

$$D_{MA} = \Delta t \cdot \alpha + X_{i-1} \tag{2}$$

$$D_{MB} = \Delta t \cdot \beta + Y_{i-1} \tag{3}$$

**3.** The electric vehicle drive apparatus according to claim 1 or 2, wherein the controller determines $N_{MA}$ and $N_{MB}$ such that $N_{MB}$ is a median within the range of Expression (1).

**4.** The electric vehicle drive apparatus according to any one of claims 1 to 3, wherein where number of teeth of the first sun gear is $Z_{S1}$, number of teeth of the first ring gear is $Z_{R1}$, number of teeth of the second sun gear is $Z_{S2}$, and number of teeth of the second ring gear is $Z_{R2}$, $i_1$ is represented by Expression (4), whereas $i_2$ is represented by Expression (5):

$$i_1 = {Z_{R1}}/{Z_{S1}} \tag{4}$$

$$i_2 = {Z_{R2}}/{Z_{S2}} \tag{5}$$

**5.** The electric vehicle drive apparatus according to any one of claims 1 to 4, wherein
a rotation direction of a wheel coupled to the output shaft is the same as a rotation direction of the first motor, and
when a drive signal of the wheel includes information directing rotation of the wheel in the backward rotation direction, the controller outputs a rotation speed command in the backward rotation direction to the first motor and outputs a rotation speed command in the forward rotation direction to the second motor.

**6.** The electric vehicle drive apparatus according to claim 5, wherein
the drive signal, when including information directing rotation of a wheel in the forward rotation direction, further includes speed change information indicating whether the current state is a first state that performs control of the second motor based on torque or a second state that performs control of the second motor based on rotation speed, and
the controller determines, based on the drive signal, rotation directions of the first motor and the second motor and based on which of torque and rotation speed control of the second motor is performed.

**7.** The electric vehicle drive apparatus according to claim 6, wherein
the drive signal includes throttle information indicating an acceleration of a rotation speed of the wheel, and
when the speed change information indicates the first state, the controller determines a first command value as a torque command value in the forward rotation direction of the first motor based on the throttle information to operate the first motor in accordance with the first command value and determines a second command value as a torque command value in the backward rotation direction of the second motor based on the throttle information to operate the second motor in accordance with the second command value.

**8.** The electric vehicle drive apparatus according to claim 6 or 7, comprising a detector detecting the rotation speed of the first motor, wherein
the drive signal includes throttle information indicating an acceleration of a rotation speed of the wheel, and
when the speed change information indicates the second state, the controller determines a torque command value in the forward rotation direction of the first motor based on the throttle information to operate the first motor in accordance with the torque command value and determines a rotation speed command value corresponding to the rotation speed of the first motor detected by the detector to operate the second motor in accordance with the rotation speed command value.

# FIG.1

# FIG.2

# FIG.3

| NAME OF OPERATION MODE | | FIRST STATE | SECOND STATE | BACKWARD TRAVELING |
|---|---|---|---|---|
| CONTROL | FIRST MOTOR | TORQUE | TORQUE | ROTATION SPEED |
| | SECOND MOTOR | TORQUE | ROTATION SPEED | ROTATION SPEED |
| ROTATION DIRECTION | FIRST MOTOR | FORWARD (+) | FORWARD (+) | BACKWARD (−) |
| | SECOND MOTOR | BACKWARD (−) | FORWARD (+) OR BACKWARD (−) | FORWARD (+) |
| | SPEED CHANGE MECHANISM INPUT/OUTPUT SHAFT | FORWARD (+) | | BACKWARD (−) |
| ONE-WAY CLUTCH | | BRAKING (STOPPING) | NON-BRAKING (ROTATION) | NON-BRAKING (ROTATION) |
| TORQUE | | CIRCULATION | DIRECT | DIRECT |

# FIG.4

START

ACQUIRE DRIVE SIGNAL INCLUDING TRAVEL DIRECTION INFORMATION, THROTTLE INFORMATION, AND SPEED CHANGE INFORMATION — S1

ACQUIRE ROTATION SPEEDS OF FIRST MOTOR AND SECOND MOTOR — S2

S3 — DOES TRAVEL DIRECTION INFORMATION INDICATE BACKWARD TRAVELING?

YES

NO

S4 — DOES SPEED CHANGE INFORMATION INDICATE FIRST STATE?

YES

NO

S5 — CALCULATE ROTATION SPEED COMMAND VALUES OF FIRST MOTOR AND SECOND MOTOR

S9 — CALCULATE TORQUE COMMAND VALUE OF FIRST MOTOR AND ROTATION SPEED COMMAND VALUE OF SECOND MOTOR

S7 — CALCULATE TORQUE COMMAND VALUES OF FIRST MOTOR AND SECOND MOTOR

S6 — OUTPUT OPERATION MODE COMMAND OF BACKWARD TRAVELING AND ROTATION SPEED COMMANDS OF FIRST MOTOR AND SECOND MOTOR

S10 — OUTPUT OPERATION MODE COMMAND OF SECOND STATE, TORQUE COMMAND OF FIRST MOTOR, AND ROTATION SPEED COMMAND OF SECOND MOTOR

S8 — OUTPUT OPERATION MODE COMMAND OF FIRST STATE AND TORQUE COMMANDS OF FIRST MOTOR AND SECOND MOTOR

END

# FIG.5

# FIG.6

# FIG.7

# FIG.8

# FIG.9

# FIG.10

# FIG.11

# FIG.12

# FIG.13

# FIG.14

# FIG.15

# FIG.16

# FIG.17

FIRST MOTOR
SECOND MOTOR

# FIG.18

## FIG.19

## FIG.20

# FIG.21

# FIG.22

# FIG.23

# FIG.24

# FIG.25

# FIG.26

# FIG.27

# FIG.28

# FIG.29

# FIG.30

# FIG.31

# FIG.32

# FIG.33

<table>
<tr><td colspan="2" align="center">**INTERNATIONAL SEARCH REPORT**</td><td colspan="2">International application No.<br>PCT/JP2017/033587</td></tr>
</table>

**A. CLASSIFICATION OF SUBJECT MATTER**

Int.Cl. B60L15/20(2006.01)i, B60K7/00(2006.01)i, B60L9/18(2006.01)i,
F16D41/06(2006.01)i, F16H3/66(2006.01)i, F16H3/72(2006.01)i,
F16H59/10(2006.01)i, F16H61/02(2006.01)i, F16H63/50(2006.01)i,
H02K7/116(2006.01)i, B60K17/12(2006.01)n

According to International Patent Classification (IPC) or to both national classification and IPC

**B. FIELDS SEARCHED**

Minimum documentation searched (classification system followed by classification symbols)

Int.Cl. B60L15/20, B60K7/00, B60L9/18, F16D41/06, F16H3/66, F16H3/72,
F16H59/10, F16H61/02, F16H63/50, H02K7/116, B60K17/12

Documentation searched other than minimum documentation to the extent that such documents are included in the fields searched

| | |
|---|---|
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2014-169712 A (NSK LTD.) 18 September 2014, abstract, paragraphs [0033]-[0048], [0076], fig. 1-2, 8 (Family: none) | 1-5<br>6-7<br>8 |
| Y | JP 2013-32097 A (NSK LTD.) 14 February 2013, abstract, paragraphs [0008], [0023]-[0036], [0038], [0048], [0054], [0066], fig. 1, 8 (Family: none) | 6-7 |
| Y | WO 2016/084801 A1 (YAMAHA MOTOR CO., LTD.) 02 June 2016, paragraphs [0095]-[0100] & EP 3206293 A1, paragraphs [0128]-[0137] & US 2017/0253113 A1 | 6-7 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 December 2017 (12.12.2017) | 26 December 2017 (26.12.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

**Patent documents cited in the description**

- JP 2013044424 A